# EUROPEAN PATENT SPECIFICATION

(11) **EP 4 560 157 B1**
(45) Date of publication and mention of the grant of the patent: **30.09.2026**
(21) Application number: 23909379.2
(22) Date of filing: 20.09.2023
(51) Int. Cl.: F16C 11/04, G06F 1/16, H04M 1/02, G09F 9/30

(54) **ROTATING SHAFT MECHANISM AND ELECTRONIC DEVICE**
DREHWELLENMECHANISMUS UND ELEKTRONISCHE VORRICHTUNG
MÉCANISME D'ARBRE ROTATIF ET DISPOSITIF ÉLECTRONIQUE

(30) Priority: 31.12.2022 CN 202211741456
(43) Date of publication of application: 28.05.2025
(73) Proprietor: Huawei Technologies Co., Ltd., Shenzhen, Guangdong 518129 (CN)
(72) Inventor: ZHEN, Feng, Shenzhen, Guangdong 518129 (CN); FAN, Wen, Shenzhen, Guangdong 518129 (CN); ZHONG, Ding, Shenzhen, Guangdong 518129 (CN); XIAO, Zhenlin, Shenzhen, Guangdong 518129 (CN)
(74) Representative: MERH-IP Matias Erny Reichl Hoffmann Patentanwälte PartG mbB
(86) International application number: PCT/CN2023/120167
(87) International publication number: WO 2024/139444

(56) References cited:
- CN-A- 113 225 412
- CN-A- 114 203 028
- CN-A- 114 776 694
- CN-A- 115 325 019
- US-A1- 2020 103 935
- US-A1- 2022 311 843

## Description

### TECHNICAL FIELD

This application relates to the field of electronic device technologies, and in particular, to a hinge mechanism and an electronic device.

### BACKGROUND

As flexible display technologies gradually mature, display manners of electronic devices change greatly. A foldable mobile phone having a flexible display, a foldable tablet computer having a flexible display, a wearable electronic device having a foldable flexible display, and the like are an important evolution direction of intelligent electronic devices in the future.

A hinge mechanism, as an important component for implementing a folding function of a foldable electronic device, has a feature of continuous foldability. The hinge mechanism may be configured to change a folding state of the electronic device, and may further provide sufficient support force for a flexible display of the electronic devices in different folding states. An existing hinge mechanism generally includes a sliding assembly, and the sliding assembly includes a slider and a sliding groove. When the hinge mechanism is folded or unfolded, the slider slides along the sliding groove, to limit a rotation direction of the hinge mechanism. However, when the hinge mechanism is subject to slight external force in an unfolded state, the foldable electronic device may shake, and consequently reliability of a structure of the entire electronic device and user experience are affected.

Document CN 114776694 A discloses a hinge mechanism used in a foldable electronic device and comprising two sliding assemblies with corresponding sliding grooves.

### SUMMARY

This application provides a hinge mechanism and an electronic device, to increase a lap amount of a sliding assembly, so that a shake phenomenon of the hinge mechanism in an unfolded state is improved.

According to a first aspect, this application provides a hinge mechanism. The hinge mechanism may be used in a foldable electronic device. Specifically, the hinge mechanism may include a main shaft, a first mounting bracket, a second mounting bracket, a first rotation support member, a second rotation support member, a first sliding assembly, and a second sliding assembly. The first mounting bracket and the second mounting bracket are oppositely disposed on two sides of the main shaft. The first mounting bracket is provided with a first sliding groove and a second sliding groove. The second mounting bracket is provided with a third sliding groove and a fourth sliding groove. The first rotation support member is disposed between the main shaft and the first mounting bracket, and is rotatably connected to the main shaft and the first mounting bracket separately. The second rotation support member is located between the main shaft and the second mounting bracket, and is rotatably connected to the main shaft and the second mounting bracket separately. The first sliding assembly may specifically include a first slider and a first rotating member. One end of the first slider is rotatably connected to the main shaft, and the other end is slidably connected to the first mounting bracket through the first sliding groove. One end of the first rotating member is rotatably connected to an end that is of the first slider and that is away from the main shaft, and the other end is slidably connected to the first mounting bracket through the second sliding groove. The second sliding assembly includes a second slider and a second rotating member. One end of the second slider is rotatably connected to the main shaft, and the other end is slidably connected to the second mounting bracket through the third sliding groove. One end of the second rotating member is rotatably connected to an end that is of the second slider and that is away from the main shaft, and the other end is slidably connected to the second mounting bracket through the fourth sliding groove. An extension direction of the first sliding groove is perpendicular to a rotation axis of the first slider relative to the main shaft, the second sliding groove is located at an end that is of the first sliding groove and that is away from the main shaft, and an extension direction of the second sliding groove and the extension direction of the first sliding groove are set at an included angle. An extension direction of the third sliding groove is perpendicular to a rotation axis of the second slider relative to the main shaft, the fourth sliding groove is located at an end that is of the third sliding groove and that is away from the main shaft, and an extension direction of the fourth sliding groove and the extension direction of the third sliding groove are set at an included angle.

When the first mounting bracket and the second mounting bracket are folded or unfolded relative to each other, the first slider rotates around the main shaft and slides along the first sliding groove, to drive the first rotating member to move along the second sliding groove; and the second slider rotates around the main shaft and slides along the third sliding groove, to drive the second rotating member to move along the fourth sliding groove. When the hinge mechanism is unfolded, the first slider and the first sliding groove, and the second slider and the third sliding groove may each have a first lap amount in a first direction, and the first rotating member and the second sliding groove, and the second rotating member and the fourth sliding groove may each have a second lap amount in a second direction. Existence of the second lap amount can increase an overall lap amount of the first sliding assembly and the second sliding assembly, so that a shake phenomenon of the hinge mechanism in an unfolded state is improved.

In the hinge mechanism, the first sliding groove may be specifically a straight-line-shaped sliding groove, and a specific shape of the second sliding groove is not limited. For example, the second sliding groove may be a straight-line-shaped guiding groove, a fold-line-shaped guiding groove, or an arc-shaped guiding groove. Correspondingly, the third sliding groove may be a straight-line-shaped sliding groove, and a specific shape of the fourth sliding groove is not limited. For example, the fourth sliding groove may be a straight-line-shaped guiding groove, a fold-line-shaped guiding groove, or an arc-shaped guiding groove.

A slidable connection between the first rotating member and the first mounting bracket may be implemented in different manners. For example, the first rotating member may include a first body and a first protrusion. The first body is rotatably connected to the first slider. The first protrusion is disposed at an end that is of the first body and that is away from the first slider. The first protrusion is accommodated in the second sliding groove, and may move in the second sliding groove, to implement the slidable connection between the first rotating member and the first mounting bracket. Correspondingly, a slidable connection between the second rotating member and the second mounting bracket may be implemented in a same manner. Specifically, the second rotating member may include a second body and a second protrusion. The second body is rotatably connected to the second slider. The second protrusion is disposed at an end that is of the second body and that is away from the second slider. The second protrusion is accommodated in the fourth sliding groove, and may move in the fourth sliding groove, to implement the slidable connection between the second rotating member and the second mounting bracket.

In some technical solutions, the first protrusion may be specifically a first roller, and the first roller is disposed on the first body and may rotate relative to the first body. When the first slider slides along the first sliding groove, the first roller rolls in the second sliding groove. In this way, friction between the first rotating member and the second sliding groove can be reduced. Correspondingly, the second protrusion may be specifically a second roller, and the second roller is disposed on the second body and may rotate relative to the second body. When the second slider slides along the third sliding groove, the second roller rolls in the fourth sliding groove. In this way, friction between the second rotating member and the fourth sliding groove can be reduced.

In some other technical solutions, the first protrusion and the first body, and the second protrusion and the second body may alternatively be fastened together in a manner of welding, bonding, or threaded connection. When the first slider slides along the first sliding groove, the first protrusion slides in the second sliding groove; and when the second slider slides along the third sliding groove, the second protrusion slides in the fourth sliding groove. Alternatively, the first protrusion and the first body may be integrally formed, and the second protrusion and the second body may be integrally formed, to enhance structural strength of the first rotating member and the second rotating member.

In some technical solutions, a side that is of the first slider and that is close to the first rotating member is provided with a first accommodating groove, and an opening of the first accommodating groove is perpendicular to a rotation plane of the first rotating member relative to the first slider. When the first rotating member moves along the second sliding groove, the first rotating member may be rotated into or out of the first accommodating groove. After the first rotating member is rotated into the first accommodating groove, a wall of the first accommodating groove may restrict movement of the first rotating member along a direction perpendicular to the rotation plane. Correspondingly, a side that is of the second slider and that is close to the second rotating member is provided with a second accommodating groove, and an opening of the second accommodating groove is perpendicular to a rotation plane of the second rotating member relative to the second slider. When the second rotating member moves along the fourth sliding groove, the second rotating member may be rotated into or out of the second accommodating groove, to restrict movement of the second rotating member along a direction perpendicular to the rotation plane.

When the mounting bracket is specifically disposed, the first mounting bracket may include a first rotating arm, a first mounting plate, and a first housing fastening bracket, the first mounting plate is disposed between the main shaft and the first housing fastening bracket, and the first mounting plate is fastened to the first housing fastening bracket. The first rotating arm may be separately fastened to the first mounting plate and the first housing fastening bracket, and an end that is of the first rotating arm and that faces the main shaft is rotatably connected to the first rotation support member. In this technical solution, the first sliding groove may be provided on the first mounting plate, and the second sliding groove may be provided on the first rotating arm or the first housing fastening bracket. Correspondingly, the second mounting bracket may include a second rotating arm, a second mounting plate, and a second housing fastening bracket, the second mounting plate is disposed between the main shaft and the second housing fastening bracket, and the second mounting plate is fastened to the second housing fastening bracket. The second rotating arm may be separately fastened to the second mounting plate and the second housing fastening bracket, and an end that is of the second rotating arm and that faces the main shaft is rotatably connected to the second rotation support member. In this technical solution, the third sliding groove may be provided on the second mounting plate, and the fourth sliding groove may be provided on the second rotating arm or the second housing fastening bracket.

In the hinge mechanism, the first rotating arm and the first housing fastening bracket are oppositely disposed, and the second sliding groove may be provided on a side that is of the first rotating arm and that faces the first housing fastening bracket. A third accommodating groove may be formed between the first rotating arm and the first housing fastening bracket, and an opening of the third accommodating groove is perpendicular to a motion plane of the first rotating member relative to the second sliding groove. In this way, when the first rotating member moves along the second sliding groove, the first rotating member may be rotated into or out of the third accommodating groove. After the first rotating member is rotated into the third accommodating groove, a wall of the third accommodating groove may restrict movement of the first rotating member along a direction perpendicular to the motion plane. Correspondingly, the second rotating arm and the second housing fastening bracket are oppositely disposed, and the fourth sliding groove may be provided on a side that is of the second rotating arm and that faces the second housing fastening bracket. A fourth accommodating groove may be formed between the second rotating arm and the second housing fastening bracket, and an opening of the fourth accommodating groove is perpendicular to a motion plane of the second rotating member relative to the fourth sliding groove. In this way, when the second rotating member moves along the fourth sliding groove, the second rotating member may be rotated into or out of the fourth accommodating groove. After the second rotating member is rotated into the fourth accommodating groove, a wall of the fourth accommodating groove may restrict movement of the second rotating member along a direction perpendicular to the motion plane.

In addition, in some technical solutions, a side that is of the first rotating arm and that faces the first slider may be provided with a first notch. When the first mounting bracket and the second mounting bracket are folded relative to each other, the first slider slides toward the first mounting bracket, and the first notch may avoid the first slider, to avoid collision between the first slider and the first rotating arm. A side that is of the second rotating arm and that faces the second slider may be provided with a second notch. When the first mounting bracket and the second mounting bracket are folded relative to each other, the second slider slides toward the second mounting bracket, and the second notch may avoid the second slider, to avoid collision between the second slider and the second rotating arm.

In addition, a rotatable connection manner between the slider and the rotating member is not limited. For example, in some technical solutions, a side that is of the first slider and that faces the first rotating member may be provided with a first rotating hole, and a first rotating boss may be disposed on a side that is of the first rotating member and that faces the first slider. The first rotating boss is accommodated in the first rotating hole, and rotates in the first rotating hole, to implement a rotatable connection between the first slider and the first rotating member. A side that is of the second slider and that faces the second rotating member is provided with a second rotating hole, and a second rotating boss is disposed on a side that is of the second rotating member and that faces the second slider. The second rotating boss is accommodated in the second rotating hole, and rotates in the second rotating hole, to implement a rotatable connection between the second slider and the second rotating member.

In a possible technical solution, the first rotating hole and the second rotating hole may be annular blind holes, and both the first rotating boss and the second rotating boss are annular bosses. The annular boss may be limited in the annular blind hole. In this way, when the first slider slides along the first sliding groove and the second slider slides along the third sliding groove, the annular boss can rotate in the annular blind hole, and the first rotating member moves along the second sliding groove and the second rotating member moves along the fourth sliding groove, to implement relative rotation between the first slider and the first rotating member and relative rotation between the second slider and the second rotating member.

In some other technical solutions, the first sliding assembly may further include a first connecting pin and a first retaining ring. The side that is of the first slider and that is close to the first rotating member is provided with a first mounting hole, and a side that is of the first rotating member and that is close to the first slider is provided with a second mounting hole. The first connecting pin passes through the first mounting hole and the second mounting hole, and is fastened to the first retaining ring, so that the first slider and the first rotating member can separately rotate around the first connecting pin. The second sliding assembly further includes a second connecting pin and a second retaining ring. The side that is of the second slider and that is close to the second rotating member is provided with a third mounting hole, and a side that is of the second rotating member and that is close to the second slider is provided with a fourth mounting hole. The second connecting pin passes through the third mounting hole and the fourth mounting hole, and is fastened to the second retaining ring, so that the second slider and the second rotating member can separately rotate around the second connecting pin.

According to a second aspect, this application provides an electronic device. The electronic device includes a flexible display, a first housing, a second housing, and the hinge mechanism in the first aspect. The first housing is fastened to the first mounting bracket, the second housing is fastened to the second mounting bracket, and the flexible display continuously covers the first housing, the second housing, and the hinge mechanism, and is separately fastened to the first housing and the second housing.

When the hinge mechanism is folded or unfolded, the first slider rotates around the main shaft and slides along the first sliding groove, to drive the first rotating member to move along the second sliding groove, and the second slider rotates around the main shaft and slides along the third sliding groove, to drive the second rotating member to move along the fourth sliding groove. When the hinge mechanism is unfolded, the first slider and the first sliding groove, and the second slider and the third sliding groove may each have a first lap amount in a first direction, and the first rotating member and the second sliding groove, and the second rotating member and the fourth sliding groove may each have a second lap amount in a second direction. Existence of the second lap amount can increase an overall lap amount of the first sliding assembly and the second sliding assembly, so that a shake phenomenon of the hinge mechanism in an unfolded state is improved.

### BRIEF DESCRIPTION OF DRAWINGS

FIG. 1 is a three-dimensional diagram of assembling of an electronic device in a folded state according to an embodiment of this application;
FIG. 2 is a diagram of a hinge mechanism in a folded state according to an embodiment of this application;
FIG. 3 is a diagram of a hinge mechanism in an unfolded state according to an embodiment of this application;
FIG. 4 is an exploded view of a hinge mechanism according to an embodiment of this application;
FIG. 5 is a diagram of a principle of a first sliding assembly according to an embodiment of this application;
FIG. 6 is a diagram of a first slider according to an embodiment of this application;
FIG. 7 is another diagram of a first slider according to an embodiment of this application;
FIG. 8 is a diagram of a first rotating member according to an embodiment of this application;
FIG. 9 is another diagram of a first rotating member according to an embodiment of this application;
FIG. 10 is a diagram of a first rotating arm according to an embodiment of this application;
FIG. 11 is a sectional view of a hinge mechanism according to an embodiment of this application;
FIG. 12 is a diagram of a first sliding assembly according to an embodiment of this application;
FIG. 13 is another sectional view of a hinge mechanism according to an embodiment of this application;
FIG. 14 is another sectional view of a hinge mechanism according to an embodiment of this application;
FIG. 15 is another sectional view of a hinge mechanism according to an embodiment of this application;
FIG. 16 is another sectional view of a hinge mechanism according to an embodiment of this application;
FIG. 17 is another sectional view of a hinge mechanism according to an embodiment of this application;
FIG. 18 is another sectional view of a hinge mechanism according to an embodiment of this application;
FIG. 19 is another diagram of a first sliding assembly according to an embodiment of this application;
FIG. 20 is another sectional view of a first sliding assembly according to an embodiment of this application;
FIG. 21 is another diagram of a first rotating member according to an embodiment of this application;
FIG. 22 is another diagram of a first slider according to an embodiment of this application;
FIG. 23 is another diagram of a first sliding assembly and a second sliding assembly according to an embodiment of this application;
FIG. 24 is another sectional view of a first sliding assembly and a second sliding assembly according to an embodiment of this application;
FIG. 25 is another diagram of a first sliding assembly and a second sliding assembly according to an embodiment of this application;
FIG. 26 is another diagram of a hinge mechanism according to an embodiment of this application; and
FIG. 27 is a diagram of a first rotating arm according to an embodiment of this application.

Reference numerals:
010: electronic device; 020: flexible display; 030: hinge mechanism;
031a: first mounting bracket; 031b: second mounting bracket; 032a: first sliding assembly;
032b: second sliding assembly; 040a: first housing; 040b: second housing;
100a: first housing fastening bracket; 100b: second housing fastening bracket; 101: supporting surface;
102: middle frame guiding groove; 103: guiding groove bottom surface; 110: guiding member;
111: body; 112: inner wall; 113: guiding groove;
114: surface; 200a: first mounting plate; 200b: second mounting plate;
210a: first installation portion; 210b: second installation portion; 211a: first sliding groove;
211b: third sliding groove; 220a: first rotating arm; 220b: second rotating arm;
222a: second sliding groove; 222b: fourth sliding groove; 223: groove bottom surface;
224: first notch; 225: step; 230a: first connecting member;
230b: second connecting member; 300a: first rotation support rod; 300b: second rotation support rod;
400: main shaft; 410: first hinge; 420: second hinge;
430: gear module; 431: first synchronization gear; 432: second synchronization gear;
433: snap ring; 434: gear pin shaft; 440a: first slider;
440b: second slider; 441: limiting portion; 442: rotating hole;
443: rotating portion; 444: first surface; 445: accommodating groove wall;
446: annular blind hole; 450a: first rotating member; 450b: second rotating member;
451: first rotating boss; 452: first body; 453: first protrusion;
454: second surface; 455: top surface; 456: second mounting hole;
457: hole wall; 460: T-shaped pin; 461: flange edge;
470: retaining ring.

### DESCRIPTION OF EMBODIMENTS

To make objectives, technical solutions, and advantages of this application clearer, the following further describes this application in detail with reference to the accompanying drawings.

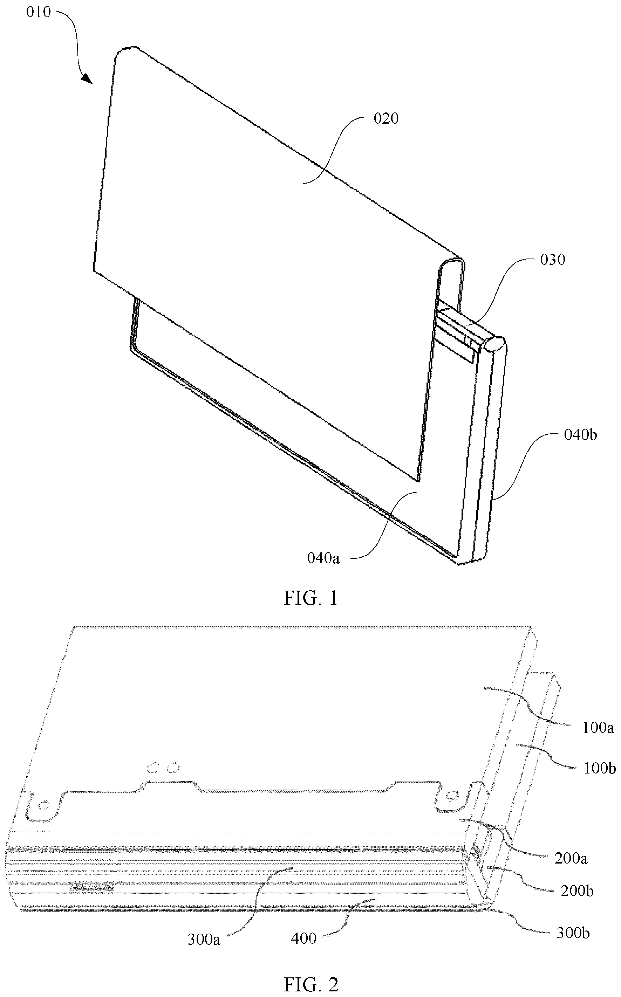

To facilitate understanding of the hinge mechanism provided in embodiments of this application, the following describes an application scenario of the hinge mechanism. The hinge mechanism may be used in, but is not limited to, a foldable electronic device, for example, a mobile phone, an intelligent wearable device, a tablet computer, or a notebook computer. When the hinge mechanism provided in embodiments of this application is used in an electronic device, refer to FIG. 1. FIG. 1 is a three-dimensional diagram of assembling of an electronic device in a folded state according to an embodiment of this application. The electronic device 010 provided in this application may be an outwardly foldable electronic device or an inwardly foldable electronic device. In addition to the hinge mechanism 030, the electronic device 010 may further include a flexible display 020, a first housing 040a, and a second housing 040b. The flexible display 020 is disposed on the hinge mechanism 030. The first housing 040a and the second housing 040b are disposed on two sides of the hinge mechanism 030, and may rotate around the hinge mechanism 030. When being used, the electronic device 010 may be folded and unfolded based on different usage scenarios. An outwardly foldable electronic device is used as an example. When the electronic device 010 is in an unfolded state, the flexible display 020 is disposed on a same side of the hinge mechanism 030, the first housing 040a, and the second housing 040b, and is connected to the hinge mechanism 030, the first housing 040a, and the second housing 040b. In this case, an outer surface that is of the first housing 040a and that is away from the flexible display 020 and an outer surface that is of the second housing 040b and that is away from the flexible display 020 may be jointly used as an appearance surface of the electronic device 010. As shown in FIG. 1, when the electronic device 010 is in a folded state, the first housing 040a and the second housing 040b are oppositely disposed, and the flexible display 020 may be used as a display surface of the electronic device 010, or may be used as the appearance surface of the electronic device 010. It may be understood that, a process in which the electronic device 010 switches from the unfolded state to the folded state, or from the folded state to the unfolded state is a process in which the first housing 040a and the second housing 040b rotate around the hinge mechanism 030. In this process, the flexible display 020 is folded or unfolded along with the first housing 040a and the second housing 040b.

Currently, in some foldable electronic devices, sliders are disposed on hinge mechanisms, and the hinge mechanisms are provided with sliding grooves. When the hinge mechanisms are folded or unfolded, the sliders slide along the sliding grooves, to limit rotation directions of the hinge mechanisms. However, when the hinge mechanisms are subject to slight external force in an unfolded state, the foldable electronic devices may shake, and consequently reliability of structures of the entire electronic devices and user experience are affected.

In view of this, this application provides a hinge mechanism and an electronic device, to increase a lap amount of a sliding assembly, so that a shake phenomenon of the hinge mechanism in an unfolded state is improved.

It should be noted that, terms used in the following embodiments are merely intended to describe specific embodiments, but are not intended to limit this application. The terms "one", "a", "the", "the foregoing", "this", and "the one" of singular forms used in this specification and the appended claims of this application are also intended to include expressions such as "one or more", unless otherwise specified in the context clearly.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized.

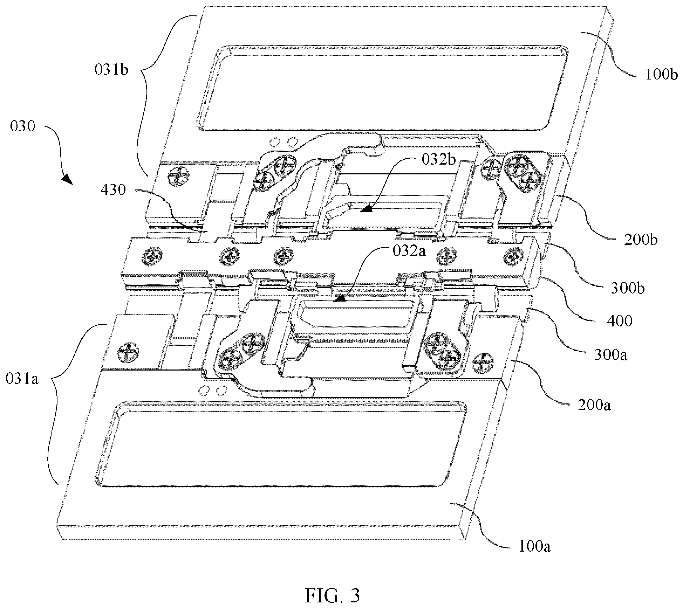

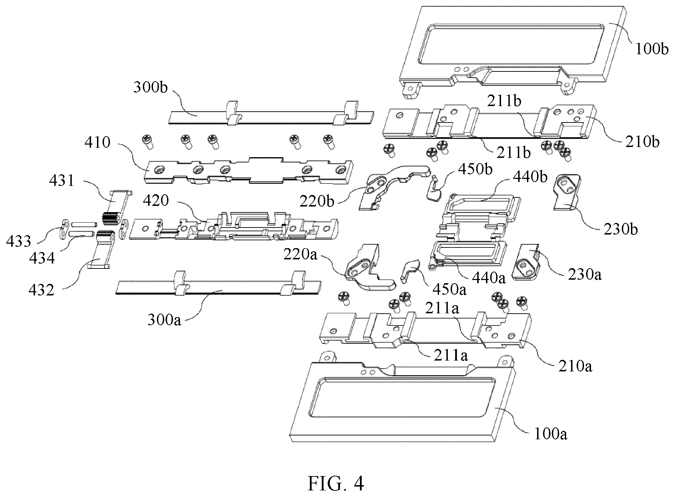

FIG. 2 is a diagram of a hinge mechanism in a folded state according to an embodiment of this application. FIG. 3 is a diagram of a hinge mechanism in an unfolded state according to an embodiment of this application. As shown in FIG. 2 and FIG. 3, in this application, the hinge mechanism 030 may include a main shaft 400, a first mounting bracket 031a, a second mounting bracket 031b, a first rotation support member 300a, a second rotation support member 300b, a first sliding assembly 032a, and a second sliding assembly 032b. Specifically, the first mounting bracket 031a and the second mounting bracket 031b are oppositely disposed on two sides of the main shaft 400. The first mounting bracket 031a is rotatably connected to the main shaft 400 through the first rotation support member 300a, and the second mounting bracket 031b is rotatably connected to the main shaft 400 through the second rotation support member 300b. FIG. 4 is an exploded view of a hinge mechanism according to an embodiment of this application. In this application, the first sliding assembly 032a and the second sliding assembly 032b are symmetrically disposed relative to the main shaft 400. Therefore, in some of the following descriptions, the first sliding assembly 032a is used as an example, and the second sliding assembly 032b is omitted. As shown in FIG. 4, the first rotation support member 300a is disposed between the main shaft 400 and the first mounting bracket 031a, and the main shaft 400 and the first mounting bracket 031a are rotatably connected to the first rotation support member 300a separately, to implement a rotatable connection between the main shaft 400 and the first mounting bracket 031a. The second rotation support member 300b is disposed between the main shaft 400 and the second mounting bracket 031b, and the main shaft 400 and the second mounting bracket 031b are rotatably connected to the second rotation support member 300b separately, to implement a rotatable connection between the main shaft 400 and the second mounting bracket 031b. The first mounting bracket 031a is provided with a first sliding groove 211a and a second sliding groove (not shown in FIG. 4). The second mounting bracket 031b is provided with a third sliding groove 211b and a fourth sliding groove (not shown in FIG. 4). The first sliding assembly 032a may specifically include a first slider 440a and a first rotating member 450a. One end of the first slider 440a is rotatably connected to the main shaft 400, and the other end is slidably connected to the first mounting bracket 031a through the first sliding groove 211a. One end of the first rotating member 450a is rotatably connected to an end that is of the first slider 440a and that is away from the main shaft 400, and the other end is slidably connected to the first mounting bracket 031a through the second sliding groove. Correspondingly, the second sliding assembly 032b may specifically include a second slider 440b and a second rotating member 450b. One end of the second slider 440b is rotatably connected to the main shaft 400, and the other end is slidably connected to the second mounting bracket 031b through the third sliding groove 211b. One end of the second rotating member 450b is rotatably connected to an end that is of the second slider 440b and that is away from the main shaft 400, and the other end is slidably connected to the second mounting bracket 031b through the fourth sliding groove. An extension direction of the first sliding groove 211a is perpendicular to a rotation axis of the first slider 440a relative to the main shaft 400, the second sliding groove is located at an end that is of the first sliding groove 211a and that is away from the main shaft 400, and an extension direction of the second sliding groove and the extension direction of the first sliding groove 211a are set at an included angle. For example, the included angle may be 1°, 26°, 30°, 50°, 74°, 81°, or 90°. Correspondingly, an extension direction of the third sliding groove 211b is perpendicular to a rotation axis of the second slider 440b relative to the main shaft 400, the fourth sliding groove is located at an end that is of the third sliding groove 211b and that is away from the main shaft 400, and an extension direction of the fourth sliding groove and the extension direction of the third sliding groove 211b are set at an included angle. For example, the included angle may be 1°, 26°, 30°, 50°, 74°, 81°, or 90°.

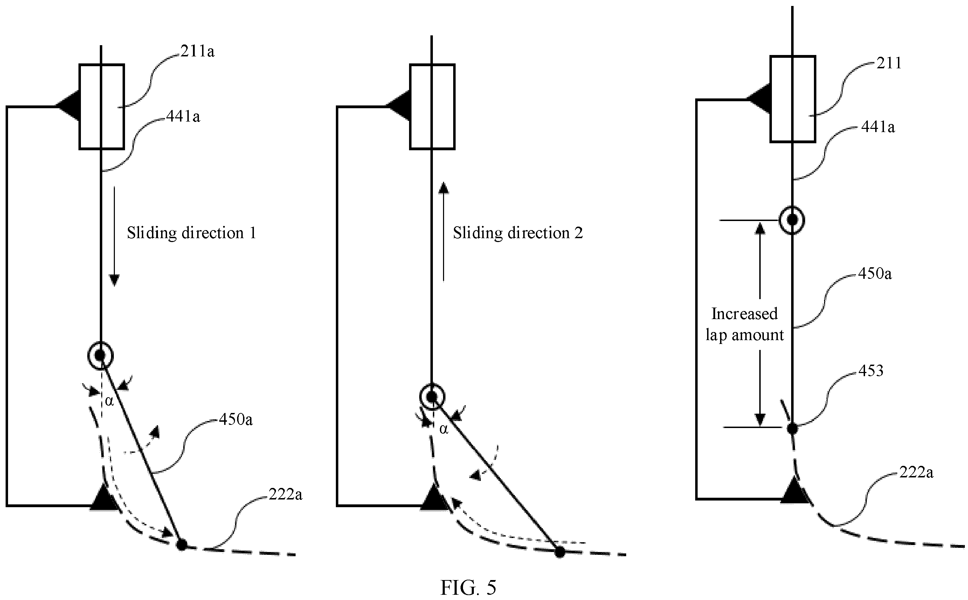

FIG. 5 is a diagram of a principle of a first sliding assembly according to an embodiment of this application. As shown in FIG. 5, when the hinge mechanism 030 is folded or unfolded, the first slider 440a rotates relative to the main shaft 400 and slides along the first sliding groove 211a simultaneously, to drive the first rotating member 450a to move along the second sliding groove 222a. In this case, the first slider 440a and the first sliding groove 211a may have a first lap amount along a first direction, and the first rotating member 450a and the second sliding groove 222a may have a second lap amount along a second direction. Existence of the second lap amount can increase a lap amount of the first sliding assembly 032a, so that a shake phenomenon of the hinge mechanism 030 in the unfolded state is improved. In addition, when the hinge mechanism 030 is used in the electronic device 010, the flexible display 020 is disposed on the hinge mechanism 030, and the main shaft 400, the first mounting bracket 031a, and the second mounting bracket 031b are separately connected to the flexible display 020. When the hinge mechanism 030 is subject to external force perpendicular to the first direction, because the first direction and the second direction are set at an included angle α, the second lap amount between the first rotating member 450a and the second sliding groove 222a can provide support for the hinge mechanism 030 and resist the external force, to improve reliability of the electronic device 010. When the first slider 440a slides along a sliding direction 1, the included angle α gradually increases, the first lap amount decreases, and the second lap amount increases. When the first slider 440a slides along a sliding direction 2, the included angle α gradually decreases, the first lap amount increases, and the second lap amount decreases. Therefore, existence of the second lap amount can improve a phenomenon that an overall lap amount of the first sliding assembly 032a is affected by a change of the first lap amount. Correspondingly, the second sliding assembly 032b is also based on the foregoing movement principle, so that an overall lap amount of the second sliding assembly 032b can be increased. Details are not described herein again.

In this embodiment of this application, the second sliding groove 222a may include a first end and a second end, and the first end is disposed close to the first rotating member 450a. Specifically, the second sliding groove 222a is a straight-line-shaped guiding groove, a fold-line-shaped guiding groove, an arc-shaped guiding groove, or a guiding groove of another irregular shape. It should be noted that, when the second sliding groove 222a is a fold-line-shaped guiding groove or an arc-shaped guiding groove, the extension direction of the second sliding groove 222a is a direction of a connection line from the first end to the second end. In other words, the extension direction of the second sliding groove 222a is a direction from the first end to the second end. In addition, the first sliding groove 211a may be a straight-line-shaped sliding groove, so that a processing process of the first slider 440a and the first sliding groove 211a can be simplified effectively.

Still refer to FIG. 3 and FIG. 4. In some embodiments, the first mounting bracket 031a may specifically include a first rotating arm 220a, a first housing fastening bracket 100a, and a first mounting plate 200a. The first mounting plate 200a is disposed between the main shaft 400 and the first housing fastening bracket 100a, and the first mounting plate 200a is fastened to the first housing fastening bracket 100a. The first rotating arm 220a may be fastened to the first mounting plate 200a and the first housing fastening bracket 100a separately, and an end that is of the first rotating arm 220a and that faces the main shaft 400 is rotatably connected to the first rotation support member 300a. In this embodiment, the first housing fastening bracket 100a is configured to be fastened to the first housing 040a. The first sliding groove 211a may be provided on the first mounting plate 200a, and the second sliding groove 222a may be provided on the first rotating arm 220a or the first housing fastening bracket 100a. Correspondingly, the second mounting bracket 031b may specifically include a second rotating arm 220b, a second mounting plate 200b, and a second housing fastening bracket 100b. The second mounting plate 200b is disposed between the main shaft 400 and the second housing fastening bracket 100b, and the second mounting plate 200b is fastened to the second housing fastening bracket 100b. The second rotating arm 220b may be fastened to the second mounting plate 200b and the second housing fastening bracket 100b separately, and an end that is of the second rotating arm 220b and that faces the main shaft 400 is rotatably connected to the second rotation support member 300b. In this technical solution, the third sliding groove 211b may be provided on the second mounting plate 200b, and the fourth sliding groove 222b may be provided on the second rotating arm 220b or the second housing fastening bracket 100b. When the second sliding groove 222a is provided on the first housing fastening bracket 100a, and the fourth sliding groove 222b is provided on the second housing fastening bracket 100b, the second lap amount of the first sliding assembly 032a and the second lap amount of the second sliding assembly 032b are the largest, and an overall lap amount of each of the first sliding assembly 032a and the second sliding assembly 032b can be further increased.

Still refer to FIG. 4. The main shaft 400 may specifically include a first hinge 410 and a second hinge 420 that are fastened together. The first support rod 300a includes a first arc arm and a second arc arm, the first arc arm and the main shaft 400 may form a revolute pair, and the second arc arm and the first rotating arm 220a may form a revolute pair. The second support rod 300b includes a third arc arm and a fourth arc arm, the third arc arm and the main shaft 400 may form a revolute pair, and the fourth arc arm and the second rotating arm 220b may form a revolute pair. In addition, the hinge mechanism 030 may further include a gear module 430. The gear module 430 includes a first synchronization gear 431, a second synchronization gear 432, a snap ring 433, and a gear pin shaft 434. The first synchronization gear 431 and the second synchronization gear 432 are connected to the first hinge 410 and the second hinge 420 through the gear pin shaft 434 and the snap ring 433. In some other embodiments, the first sliding assembly 032a may further include a first connecting member 230a. The first connecting member 230a and the second arc arm of the first rotation support rod 300a form a revolute pair, and may be installed on a first installation portion 210a of the first mounting plate 200a through thread connection. The second sliding assembly 032b may further include a second connecting member 230b. The second connecting member 230b and the fourth arc arm of the second rotation support rod 300b form a revolute pair, and may be installed on a second installation portion 210b of the second mounting plate 200b through thread connection.

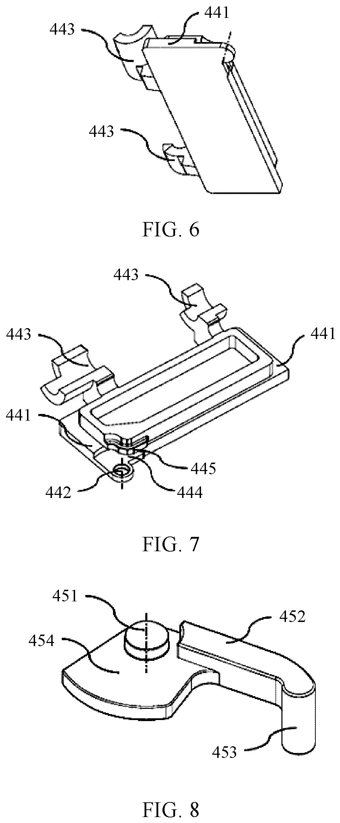

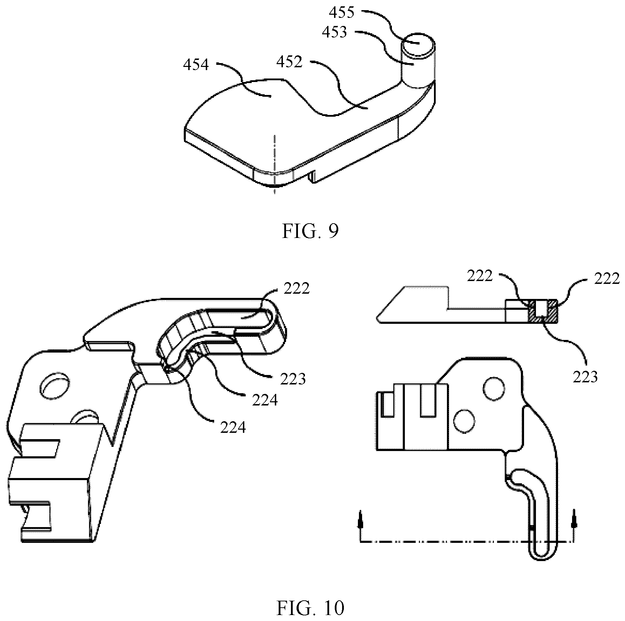

The following uses the first slider 440a as an example to describe the first slider 440a and the second slider 440b. FIG. 6 is a diagram of a first slider according to an embodiment of this application. FIG. 7 is another diagram of a first slider according to an embodiment of this application. As shown in FIG. 6 and FIG. 7, the first slider 440a may include: a limiting portion 441 that slides along the first sliding groove 211a, a rotating hole 442 that rotatably cooperates with the first rotating member 450a, and a rotating portion 443 that is rotatably connected to the second arc arm of the first rotation support rod 300a. A first surface 444 of the first slider 440a is opposite to a second surface 454 of the first rotating member 450a. The following uses the first slider 440a as an example to describe the first slider 440a and the second slider 440b. FIG. 8 is a diagram of a first rotating member according to an embodiment of this application. FIG. 9 is another diagram of a first rotating member according to an embodiment of this application. As shown in FIG. 8 and FIG. 9, the first rotating member 450a may include a first body 452, and a first rotating boss 451 and a first protrusion 453 that are disposed on the first body 452. The first body 452 is rotatably connected to the first slider 440a. Specifically, the first protrusion 453 is disposed at an end that is of the first body 452 and that is away from the main shaft 400. The first protrusion 453 may be accommodated in the second sliding groove 222a, and may slide in the second sliding groove 222a, to implement a slidable connection between the first rotating member 450a and the first mounting bracket 031a. In this application, movement of the first protrusion 453 in the second sliding groove 222a may include sliding and/or rolling. In some embodiments, the first protrusion 453 and the first body 452 may be integrally formed, so that structural strength of the first rotating member 450a can be increased. When the first slider 440a slides along the first sliding groove 211a, the first protrusion 453 slides along the second sliding groove 222a. In some other embodiments, the first protrusion 453 may alternatively be a first roller. Specifically, the first roller is rotatably connected to the first body 452. When the first slider 440a slides along the first sliding groove 211a, the first roller rolls along the second sliding groove 222a, so that friction between the first rotating member 450a and the second sliding groove 222a can be reduced.

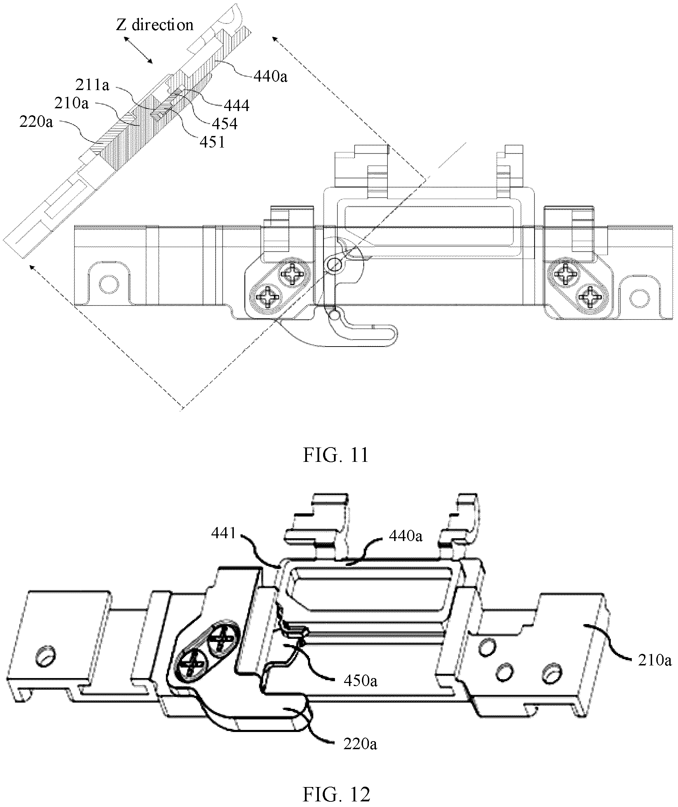

FIG. 10 is a diagram of a first rotating arm according to an embodiment of this application. FIG. 11 is a sectional view of a hinge mechanism according to an embodiment of this application. As shown in FIG. 10 and FIG. 11, the second sliding groove 222a includes a groove bottom surface 223, the first protrusion 453 of the first rotating member 450a may be accommodated in the second sliding groove 222a, and a top surface 455 of the first protrusion 453 and the groove bottom surface 223 of the second sliding groove 222a are oppositely disposed. In this way, each of two sides of the first protrusion 453 along a Z direction is limited by a fitting surface. The second sliding groove 222a may be provided with a first notch 224, and the first notch 224 is configured to avoid an accommodating groove wall 445 of the first slider 440a, to avoid collision between the first slider 440a and the first rotating arm 220a. Correspondingly, the fourth sliding groove 222b may also be provided with a second notch, and the second notch is configured to avoid an accommodating groove wall of the second slider 440b, to avoid collision between the second slider 440b and the second rotating arm 220b.

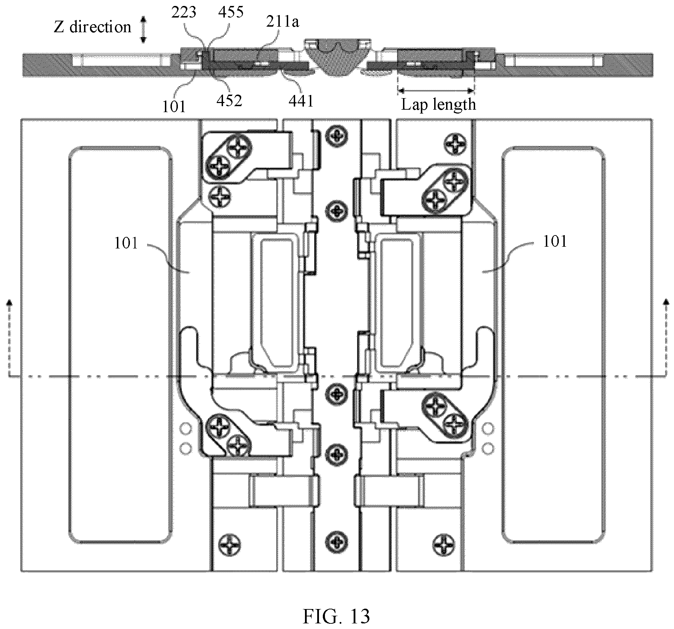

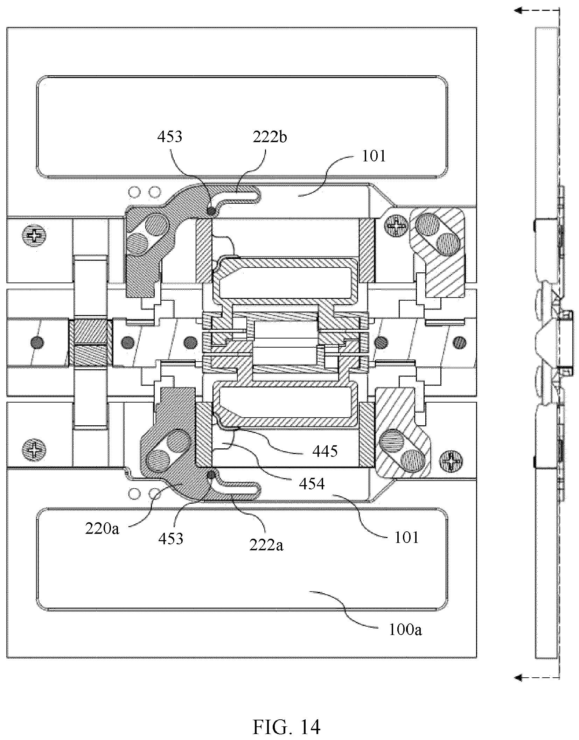

FIG. 12 is a partial diagram of a first sliding assembly according to an embodiment of this application. As shown in FIG. 7 and FIG. 12, in this embodiment of this application, a side that is of the first slider 440a and that is close to the first rotating member 450a may be provided with a first accommodating groove. A shape of the first accommodating groove is not limited, and may be specifically designed according to a shape of the first body 452 of the first rotating member 450a. An opening of the first accommodating groove is perpendicular to a rotation plane of the first rotating member 450a relative to the first slider 440a. FIG. 13 is another sectional view of a hinge mechanism according to an embodiment of this application, and FIG. 14 is another sectional view of a hinge mechanism according to an embodiment of this application. As shown in FIG. 13 and FIG. 14, when the first rotating member 450a moves along the second sliding groove 222a, the first body 452 of the first rotating member 450a may be rotated into or out of the first accommodating groove, to reduce a size of the first sliding assembly 032a along a direction perpendicular to the main shaft 400 corresponding to a case in which the hinge mechanism is folded. Specifically, when the hinge mechanism 030 is in the unfolded state, the first rotating member 450a may not be accommodated in the first accommodating groove. When the hinge mechanism 030 is folded, the first rotating member 450a is gradually rotated into the first accommodating groove. Alternatively, at least a part of the first rotating member 450a may be accommodated in the first accommodating groove. In this way, each of two sides of the first rotating member 450a along the Z direction can be limited by a fitting surface, so that a position of the first rotating member 450a relative to the first slider 440a is limited, to avoid deviation of the position of the first rotating member 450a caused by external force.

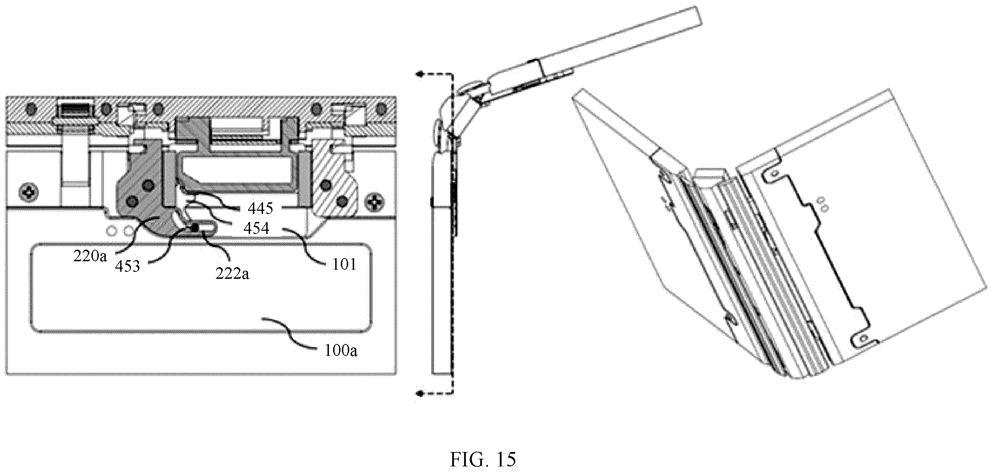

As shown in FIG. 11 and FIG. 14, the second sliding groove 222a is provided on a surface of a side that is of the first hinge arm 220a and that is close to the first rotating member 450a. When the hinge mechanism 030 is folded, the first rotating member 450a moves from the first end to the second end. When the hinge mechanism 030 is unfolded, the first rotating member 450a moves from the second end to the first end. As shown in FIG. 14, in a specific embodiment, the first end and the second end may be closed ends. After the hinge mechanism 030 is assembled, the first rotating member 450a may be limited in the second sliding groove 222a. FIG. 15 is another sectional view of a hinge mechanism according to an embodiment of this application. As shown in FIG. 15, the first protrusion 453 of the first rotating member 450a moves based on a track of the groove bottom surface 223 on the first rotating arm 220a, and the second surface 454 is opposite to the first surface 444 and may move relative to the first surface 444.

In another specific embodiment, the first end may be an open end. When the hinge mechanism 030 is unfolded, the first rotating member 450a may move from the second end to the first end, and slide out of the second sliding groove 222a from the first end. When the hinge mechanism 030 is folded, the first rotating member 450a may slide into the second sliding groove 222a from the first end, and move from the first end to the second end along the first direction. As shown in FIG. 11, in other embodiments, the first rotating arm 220a may abut against the first installation portion 210a. In this case, the first end of the second sliding groove 222a is an open end, and the first sliding groove 211a communicates with the first end of the second sliding groove 222a. In this way, when the hinge mechanism 030 is unfolded, the first rotating member 450a may move along the second sliding groove 222a and enter the first sliding groove 211a from the first end. In this embodiment, the second direction of the second sliding groove 222a may be disposed perpendicular to the first direction of the first sliding groove 211a. In other words, the second sliding groove 222a may be disposed in parallel to the hinge. In this way, a size of the first sliding assembly 032a corresponding to a case in which the hinge mechanism 030 is folded may be reduced, and support in a direction parallel to the hinge may be provided for the hinge mechanism 030.

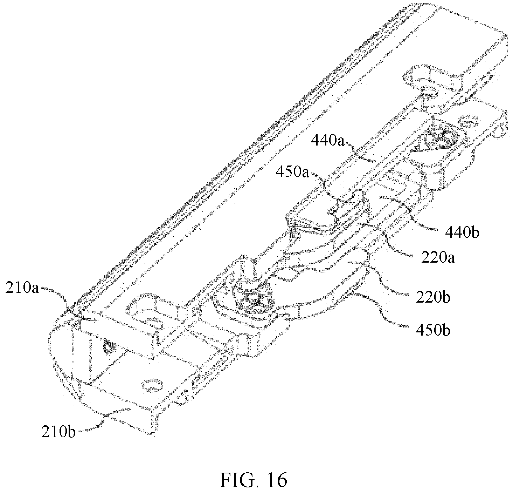

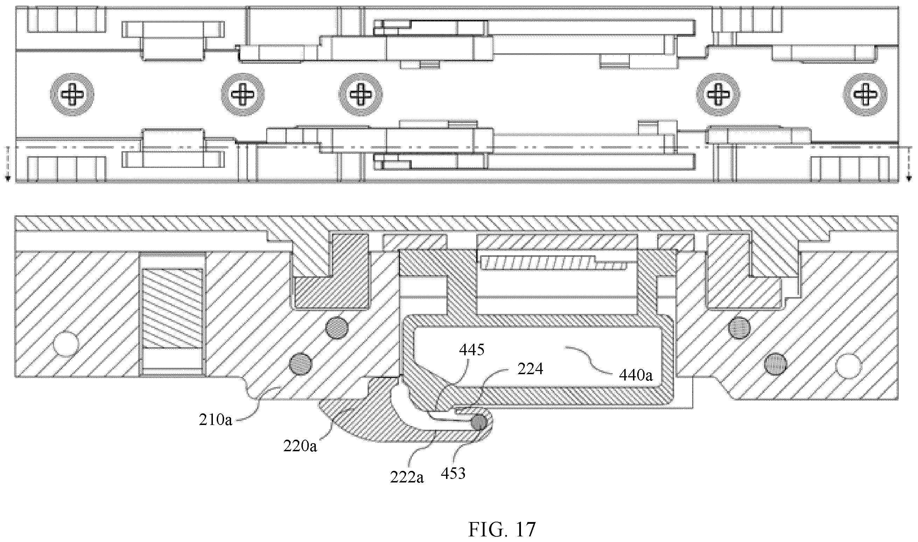

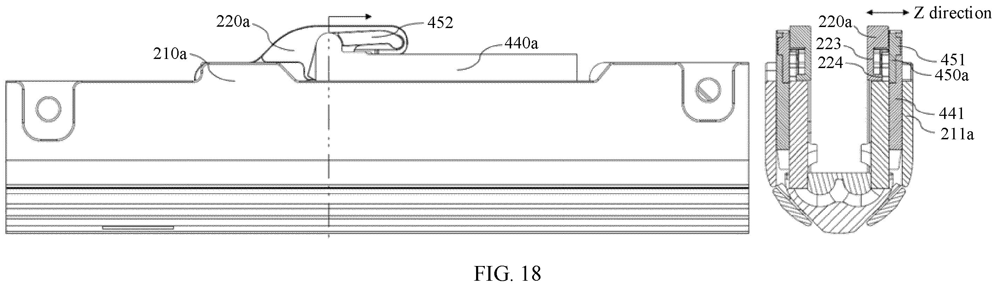

FIG. 16 is another sectional view of a hinge mechanism according to an embodiment of this application. As shown in FIG. 16, in this embodiment of this application, an end of the first rotating arm 220a is fastened to the first mounting bracket 031a, and the first rotating arm 220a and the first mounting bracket 031a are oppositely disposed, to form a third accommodating groove. The second sliding groove 222a may be disposed on a side that is of the first rotating arm 220a and that faces the first housing fastening bracket 100a. When the first rotating member 450a moves along the second sliding groove 222a, at least a part of the first rotating member 450a is accommodated in the third accommodating groove. In this way, when the hinge mechanism 030 is folded, and the first rotating member 450a moves along the second sliding groove 222a, the first rotating member 450a can be rotated into or out of the third accommodating groove. After the first rotating member 450a is rotated into the third accommodating groove, a wall of the third accommodating groove may restrict movement of the first rotating member 450a along a direction perpendicular to the motion plane, and may reduce a size of the hinge mechanism 030 in the folded state. Correspondingly, the second rotating arm 220b and the second housing fastening bracket 100b are oppositely disposed, and the fourth sliding groove may be provided on a side that is of the second rotating arm 220b and that faces the second housing fastening bracket 100b. A fourth accommodating groove may be formed between the second rotating arm 220b and the second housing fastening bracket 100b, and an opening of the fourth accommodating groove is perpendicular to a motion plane of the second rotating member 450b relative to the fourth sliding groove. In this way, when the second rotating member 450b moves along the fourth sliding groove, the second rotating member 450b may be rotated into or out of the fourth accommodating groove. After the second rotating member 450b is rotated into the fourth accommodating groove, a wall of the fourth accommodating groove may restrict movement of the second rotating member 450b along a direction perpendicular to the motion plane. FIG. 17 is another sectional view of a hinge mechanism according to an embodiment of this application, and FIG. 18 is another sectional view of a hinge mechanism according to an embodiment of this application. As shown in FIG. 17 and FIG. 18, when the hinge mechanism 030 is folded, the first notch 224 is configured to avoid the accommodating groove wall 445 of the first slider 440a, to avoid collision between the first slider 440a and the first rotating arm 220a, and the first notch 224 does not penetrate in the Z direction, so that an overlapping area between the first surface 444 of the first slider 440a and the second surface 454 of the first rotating member 450a can be increased.

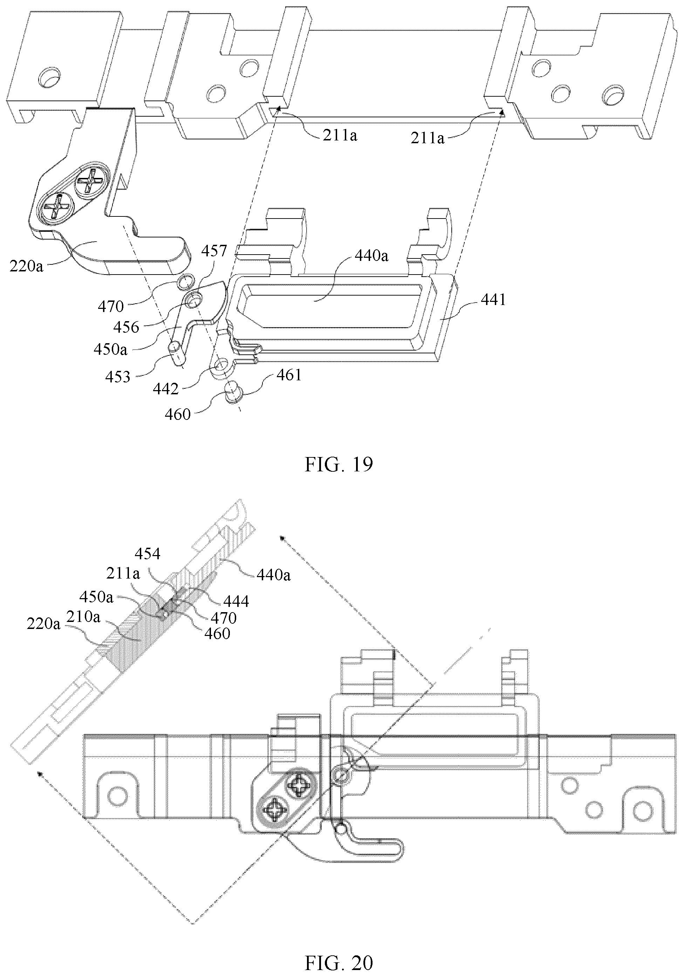

FIG. 19 is another diagram of a first sliding assembly according to an embodiment of this application. FIG. 20 is another sectional view of a first sliding assembly according to an embodiment of this application. As shown in FIG. 19 and FIG. 20, in this application, a rotatable connection manner of the first slider 440a and the first rotating member 450a is not limited. In some embodiments, the first sliding assembly 032a further includes a T-shaped pin 460 and a retaining ring 470. The side that is of the first slider 440a and that is close to the first rotating member 450a is provided with the rotating hole 442, and the rotating hole 442 is used as a first mounting hole. A side that is of the first rotating member 450a and that is close to the first slider 440a is provided with a second mounting hole 456. The T-shaped pin 460 passes through the rotating hole 442 and the second mounting hole 456, and is fastened to the retaining ring 470 provided on a hole wall 457. A flange edge 461 of the T-shaped pin 460 limits the T-shaped pin 460 to a position in the rotating hole 442 and the second mounting hole 456. The flange edge 461 and the retaining ring 470 together may limit a degree of freedom of the first rotating member 450a and the first slider 440a in an axial direction (as shown by a dash-dot line in the figure).

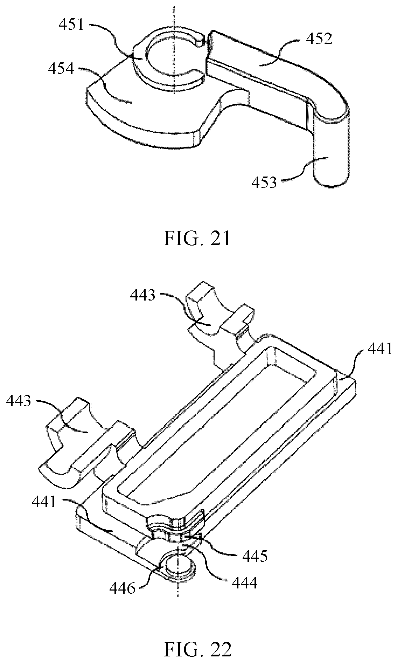

As shown in FIG. 6 to FIG. 9, in some embodiments, the side that is of the first slider 440a and that is close to the first rotating member 450a is provided with the rotating hole 442, and the first rotating boss 451 is disposed on the side that is of the first rotating member 450a and that is close to the first slider 440a. The first rotating boss 451 is accommodated in the rotating hole 442, and may rotate in the rotating hole 442. FIG. 21 is another diagram of a first rotating member according to an embodiment of this application. FIG. 22 is another diagram of a first slider according to an embodiment of this application. As shown in FIG. 21 and FIG. 22, in a specific embodiment, the side that is of the first slider 440a and that is close to the first rotating member 450a is provided with an annular blind hole 446, the first rotating boss 451 is an annular boss, and the annular boss may be limited in the annular blind hole 446. In this way, when the first slider 440a slides along the first sliding groove 211a and the second slider 440b slides along the third sliding groove 211b, the annular boss can rotate in the annular blind hole 446, and the first rotating member 450a moves along the second sliding groove 222a and the second rotating member 450b moves along the fourth sliding groove 222b, to implement relative rotation between the first slider 440a and the first rotating member 450a and relative rotation between the second slider 440b and the second rotating member 450b.

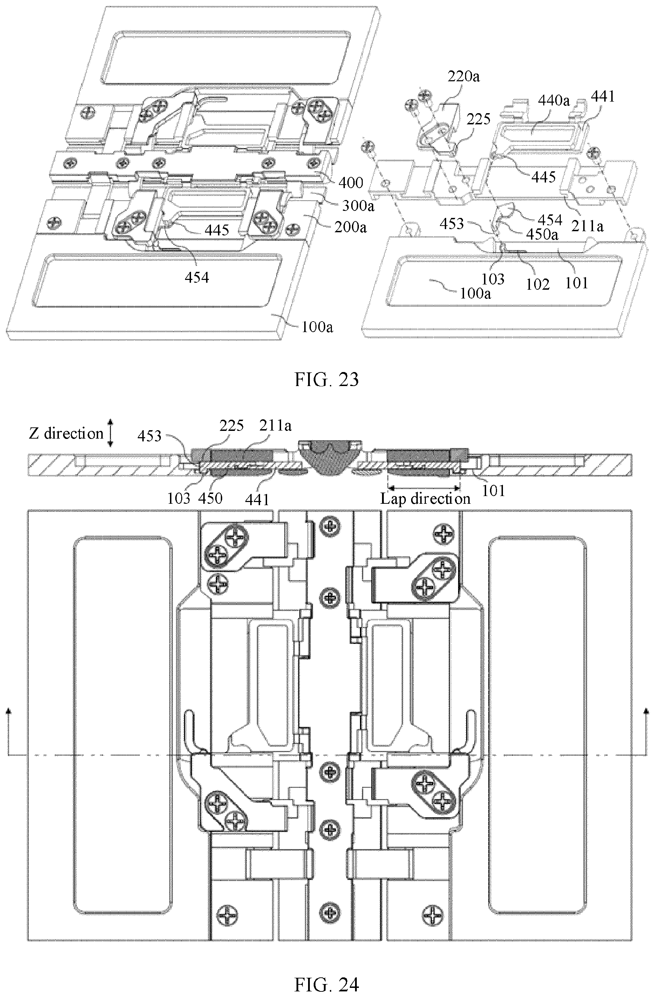

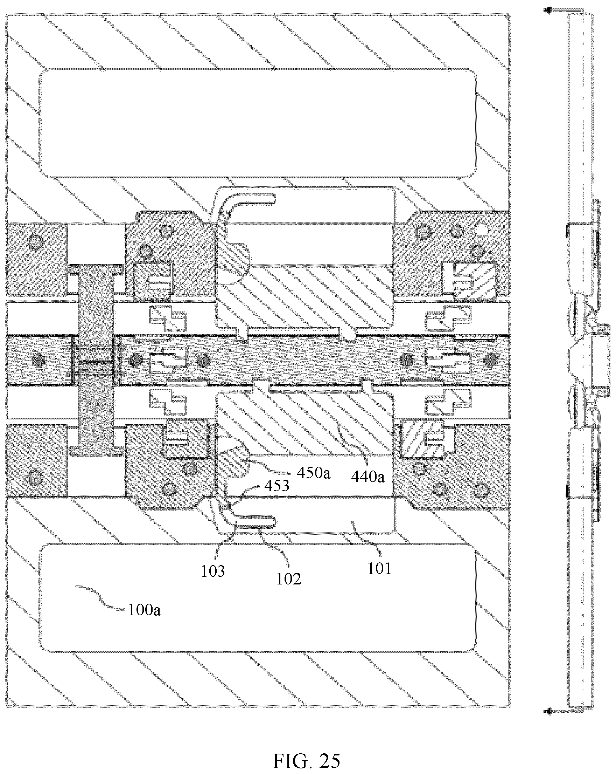

In this embodiment of this application, when the second sliding groove 222a is provided on the first rotating arm 220a, the first mounting bracket 031a may be further provided with a fifth sliding groove, the fifth sliding groove and the second sliding groove 222a are oppositely provided, and an extension direction of the fifth sliding groove is the same as the extension direction of the second sliding groove 222a. The first rotating member 450a includes a second body, a second protrusion, and a third protrusion. The second body is rotatably connected to the first slider 440a, and the second protrusion and the third protrusion are oppositely disposed on a side that is of the second body and that is away from the main shaft 400. The second protrusion is accommodated in the second sliding groove 222a, and may move along the second sliding groove 222a. The third protrusion is accommodated in the fifth sliding groove and may move along the fifth sliding groove. When the first slider 440a slides along the first sliding groove 211a, the second protrusion moves along the second sliding groove 222a, and the third protrusion moves along the second guiding groove. FIG. 23 is another diagram of a first sliding assembly and a second sliding assembly according to an embodiment of this application. FIG. 24 is another sectional view of a first sliding assembly and a second sliding assembly according to an embodiment of this application. FIG. 25 is another diagram of a first sliding assembly and a second sliding assembly according to an embodiment of this application. As shown in FIG. 23 and FIG. 25, the second sliding groove 222a may be provided on the first housing fastening bracket 100a. In this embodiment, the first housing fastening bracket 100a is used as a middle frame, and the second sliding groove 222a is used as a middle frame guiding groove 102. The first rotating arm 220a may be used as a connecting member, one end of the first rotating arm 220a and the second arc arm of the first rotation support rod 300a form a revolute pair, and the other end is fastened to the first mounting bracket 031a. The first rotating member 450a includes the first protrusion 453, and the first rotating member 450a and a supporting surface 101 of the middle frame are oppositely disposed. The first protrusion 453 moves along a guiding groove bottom surface 103 of the middle frame guiding groove 102. As shown in FIG. 24, the two sides of the first protrusion 453 along the Z direction are limited respectively by a step 225 of the first rotating arm 220a and the guiding groove bottom surface 103.

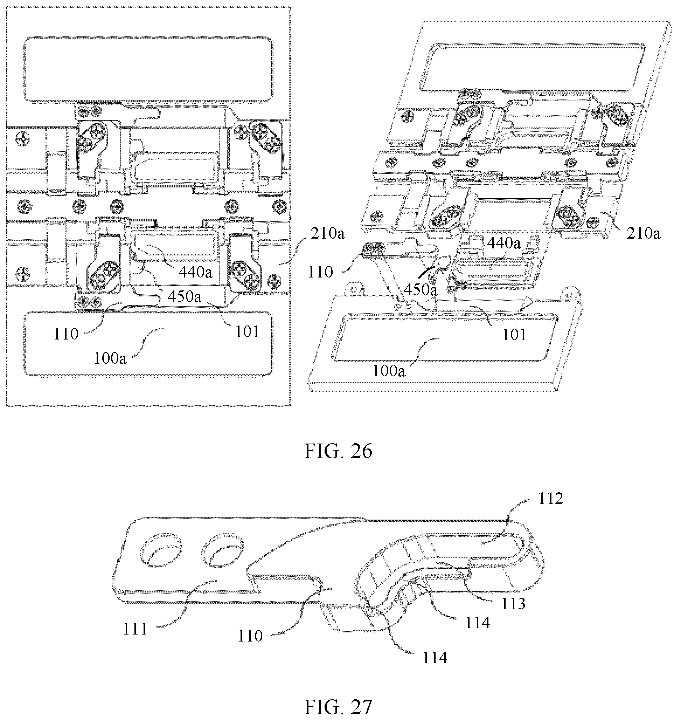

FIG. 26 is another diagram of a hinge mechanism according to an embodiment of this application. FIG. 27 is a diagram of a first rotating arm according to an embodiment of this application. As shown in FIG. 26 and FIG. 27, in a specific embodiment, the first rotating arm 220a may be manufactured as a guiding member 110, and may include a guiding body 111. The guiding body 111 includes a guiding groove 113, and an inner wall 112 of the guiding groove 113 may be arc-shaped. A surface 114 of the guiding body 111 may be disposed toward the first rotating member 450a. In this way, the guiding member 110 may be used as an independent part to adjust the second direction of the guiding groove 113 without affecting movement of another part.

Terms used in the foregoing embodiments are merely intended to describe specific embodiments, but are not intended to limit this application. The terms "one", "a", "the", "the foregoing", "this", and "the one" of singular forms used in this specification and the appended claims of this application are also intended to include expressions such as "one or more", unless otherwise specified in the context clearly.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A hinge mechanism (030), used in a foldable electronic device (010), wherein the hinge mechanism comprises a main shaft (400), a first mounting bracket (031a), a second mounting bracket (031b), a first rotation support member (300a), a second rotation support member (300b), a first sliding assembly (032a), and a second sliding assembly (032b), wherein
the first mounting bracket and the second mounting bracket are oppositely disposed on two sides of the main shaft; the first mounting bracket is provided with a first sliding groove and a second sliding groove; and the second mounting bracket is provided with a third sliding groove and a fourth sliding groove;
the first rotation support member is located between the main shaft and the first mounting bracket, and is rotatably connected to the main shaft and the first mounting bracket separately; and the second rotation support member is located between the main shaft and the second mounting bracket, and is rotatably connected to the main shaft and the second mounting bracket separately;
the first sliding assembly comprises a first slider and a first rotating member; one end of the first slider is rotatably connected to the main shaft, and the other end is slidably connected to the first mounting bracket through the first sliding groove; and one end of the first rotating member is rotatably connected to an end that is of the first slider and that is away from the main shaft, and the other end is slidably connected to the first mounting bracket through the second sliding groove;
the second sliding assembly comprises a second slider and a second rotating member; one end of the second slider is rotatably connected to the main shaft, and the other end is slidably connected to the second mounting bracket through the third sliding groove; and one end of the second rotating member is rotatably connected to an end that is of the second slider and that is away from the main shaft, and the other end is slidably connected to the second mounting bracket through the fourth sliding groove;
an extension direction of the first sliding groove is perpendicular to a rotation axis of the first slider relative to the main shaft, the second sliding groove is located at an end that is of the first sliding groove and that is away from the main shaft, and an extension direction of the second sliding groove and the extension direction of the first sliding groove are set at an included angle; and an extension direction of the third sliding groove is perpendicular to a rotation axis of the second slider relative to the main shaft, the fourth sliding groove is located at an end that is of the third sliding groove and that is away from the main shaft, and an extension direction of the fourth sliding groove and the extension direction of the third sliding groove are set at an included angle; and
when the first mounting bracket and the second mounting bracket are folded or unfolded relative to each other, the first slider rotates around the main shaft and slides along the first sliding groove, to drive the first rotating member to move along the second sliding groove, and the second slider rotates around the main shaft and slides along the third sliding groove, to drive the second rotating member to move along the fourth sliding groove.

2. The hinge mechanism according to claim 1, wherein the first sliding groove is a straight-line-shaped sliding groove, and the second sliding groove is a straight-line-shaped guiding groove, a fold-line-shaped guiding groove, or an arc-shaped guiding groove; and
the third sliding groove is a straight-line-shaped sliding groove, and the fourth sliding groove is a straight-line-shaped guiding groove, a fold-line-shaped guiding groove, or an arc-shaped guiding groove.

3. The hinge mechanism according to claim 1 or 2, wherein the first rotating member comprises a first body and a first protrusion; and the first body is rotatably connected to the first slider, the first protrusion is disposed at an end that is of the first body and that is away from the first slider, and the first protrusion is accommodated in the second sliding groove, and moves in the second sliding groove, to implement a slidable connection between the first rotating member and the first mounting bracket; and
the second rotating member comprises a second body and a second protrusion; and the second body is rotatably connected to the second slider, the second protrusion is disposed at an end that is of the second body and that is away from the second slider, and the second protrusion is accommodated in the fourth sliding groove, and moves in the fourth sliding groove, to implement a slidable connection between the second rotating member and the second mounting bracket.

4. The hinge mechanism according to claim 3, wherein the first protrusion is a first roller, and the first roller is disposed on the first body and is capable of rotating relative to the first body; and when the first slider slides along the first sliding groove, the first roller rolls in the second sliding groove; and
the second protrusion is a second roller, and the second roller is disposed on the second body and is capable of rotating relative to the second body; and when the second slider slides along the third sliding groove, the second roller rolls in the fourth sliding groove.

5. The hinge mechanism according to claim 3, wherein the first protrusion and the first body are integrally formed, and the second protrusion and the second body are integrally formed.

6. The hinge mechanism according to any one of claims 1 to 5, wherein a side that is of the first slider and that is close to the first rotating member is provided with a first accommodating groove, and an opening of the first accommodating groove is perpendicular to a rotation plane of the first rotating member relative to the first slider; and when the first rotating member moves along the second sliding groove, the first rotating member is rotated into or out of the first accommodating groove; and
a side that is of the second slider and that is close to the second rotating member is provided with a second accommodating groove, and an opening of the second accommodating groove is perpendicular to a rotation plane of the second rotating member relative to the second slider; and when the second rotating member moves along the fourth sliding groove, the second rotating member is rotated into or out of the second accommodating groove.

7. The hinge mechanism according to any one of claims 1 to 6, wherein the first mounting bracket comprises a first rotating arm, a first mounting plate, and a first housing fastening bracket, the first mounting plate is disposed between the main shaft and the first housing fastening bracket, and the first mounting plate is fastened to the first housing fastening bracket; the first rotating arm is separately fastened to the first mounting plate and the first housing fastening bracket, and an end that is of the first rotating arm and that faces the main shaft is rotatably connected to the first rotation support member; and the first sliding groove is provided on the first mounting plate, and the second sliding groove is provided on the first rotating arm or the first housing fastening bracket; and
the second mounting bracket comprises a second rotating arm, a second mounting plate, and a second housing fastening bracket, the second mounting plate is disposed between the main shaft and the second housing fastening bracket, and the second mounting plate is fastened to the second housing fastening bracket; the second rotating arm is separately fastened to the second mounting plate and the second housing fastening bracket, and an end that is of the second rotating arm and that faces the main shaft is rotatably connected to the second rotation support member; and the third sliding groove is provided on the second mounting plate, and the fourth sliding groove is provided on the second rotating arm or the second housing fastening bracket.

8. The hinge mechanism according to claim 7, wherein the first rotating arm and the first housing fastening bracket are oppositely disposed, and the second sliding groove is provided on a side that is of the first rotating arm and that faces the first housing fastening bracket; a third accommodating groove is formed between the first rotating arm and the first housing fastening bracket, and an opening of the third accommodating groove is perpendicular to a motion plane of the first rotating member relative to the second sliding groove; and when the first rotating member moves along the second sliding groove, the first rotating member is rotated into or out of the third accommodating groove; and
the second rotating arm and the second housing fastening bracket are oppositely disposed, and the fourth sliding groove is provided on a side that is of the second rotating arm and that faces the second housing fastening bracket; a fourth accommodating groove is formed between the second rotating arm and the second housing fastening bracket, and an opening of the fourth accommodating groove is perpendicular to a motion plane of the second rotating member relative to the fourth sliding groove; and when the second rotating member moves along the fourth sliding groove, the second rotating member is rotated into or out of the fourth accommodating groove.

9. The hinge mechanism according to claim 7 or 8, wherein a side that is of the first rotating arm and that faces the first slider is provided with a first notch; and when the first mounting bracket and the second mounting bracket are folded relative to each other, the first slider slides toward the first mounting bracket, and the first notch avoids the first slider; and
a side that is of the second rotating arm and that faces the second slider is provided with a second notch; and when the first mounting bracket and the second mounting bracket are folded relative to each other, the second slider slides toward the second mounting bracket, and the second notch avoids the second slider.

10. The hinge mechanism according to any one of claims 1 to 9, wherein a side that is of the first slider and that faces the first rotating member is provided with a first rotating hole, and a first rotating boss is disposed on a side that is of the first rotating member and that faces the first slider; and the first rotating boss is accommodated in the first rotating hole, and rotates in the first rotating hole, to implement a rotatable connection between the first slider and the first rotating member; and
a side that is of the second slider and that faces the second rotating member is provided with a second rotating hole, and a second rotating boss is disposed on a side that is of the second rotating member and that faces the second slider; and the second rotating boss is accommodated in the second rotating hole, and rotates in the second rotating hole, to implement a rotatable connection between the second slider and the second rotating member.

11. The hinge mechanism according to claim 10, wherein the first rotating hole and the second rotating hole are both annular blind holes, and the first rotating boss and the second rotating boss are both annular bosses.

12. The hinge mechanism according to any one of claims 1 to 11, wherein the first sliding assembly further comprises a first connecting pin and a first retaining ring; the side that is of the first slider and that is close to the first rotating member is provided with a first mounting hole, and a side that is of the first rotating member and that is close to the first slider is provided with a second mounting hole; and the first connecting pin passes through the first mounting hole and the second mounting hole, and is fastened to the first retaining ring; and
the second sliding assembly further comprises a second connecting pin and a second retaining ring; the side that is of the second slider and that is close to the second rotating member is provided with a third mounting hole, and a side that is of the second rotating member and that is close to the second slider is provided with a fourth mounting hole; and the second connecting pin passes through the third mounting hole and the fourth mounting hole, and is fastened to the second retaining ring.

13. An electronic device (010), comprising a flexible display (020), a first housing (040a), a second housing (040b), and the hinge mechanism (030) according to any one of claims 1 to 12, wherein the first housing is fastened to the first mounting bracket, the second housing is fastened to the second mounting bracket, and the flexible display continuously covers the first housing, the second housing, and the hinge mechanism, and is separately fastened to the first housing and the second housing.

## Patentansprüche

1. Scharniermechanismus (030), der in einem klappbaren elektronischen Gerät (010) verwendet wird,
wobei der Scharniermechanismus eine Hauptwelle (400), eine erste Montagehalterung (031a), eine zweite Montagehalterung (031b), ein erstes Drehstützelement (300a), ein zweites Drehstützelement (300b), eine erste Schiebebaugruppe (032a) und eine zweite Schiebebaugruppe (032b) umfasst, wobei
die erste Montagehalterung und die zweite Montagehalterung auf zwei Seiten der Hauptwelle gegenüberliegend angeordnet sind; wobei die erste Montagehalterung mit einer ersten Schiebenut und einer zweiten Schiebenut versehen ist; und wobei die zweite Montagehalterung mit einer dritten Schiebenut und einer vierten Schiebenut versehen ist;
das erste Drehstützelement zwischen der Hauptwelle und der ersten Montagehalterung angeordnet ist und separat drehbar mit der Hauptwelle und der ersten Montagehalterung verbunden ist; und wobei das zweite Drehstützelement zwischen der Hauptwelle und der zweiten Montagehalterung angeordnet ist und separat drehbar mit der Hauptwelle und der zweiten Montagehalterung verbunden ist;
die erste Schiebebaugruppe eine erste Schiebevorrichtung und ein erstes Drehelement umfasst; wobei ein Ende der ersten Schiebevorrichtung drehbar mit der Hauptwelle verbunden ist und das andere Ende durch die erste Schiebenut verschiebbar mit der ersten Montagehalterung verbunden ist; und wobei ein Ende des ersten Drehelements drehbar mit einem Ende verbunden ist, das zu der ersten Schiebevorrichtung gehört und das von der Hauptwelle entfernt ist, und das andere Ende durch die zweite Schiebenut verschiebbar mit der ersten Montagehalterung verbunden ist;
die zweite Schiebebaugruppe eine zweite Schiebevorrichtung und ein zweites Drehelement umfasst; wobei ein Ende der zweiten Schiebevorrichtung drehbar mit der Hauptwelle verbunden ist und das andere Ende durch die dritte Schiebenut verschiebbar mit der zweiten Montagehalterung verbunden ist; und wobei ein Ende des zweiten Drehelements drehbar mit einem Ende verbunden ist, das zu der zweiten Schiebevorrichtung gehört und das von der Hauptwelle entfernt ist, und das andere Ende durch die vierte Schiebenut verschiebbar mit der zweiten Montagehalterung verbunden ist;
eine Erstreckungsrichtung der ersten Schiebenut relativ zur Hauptwelle senkrecht zu einer Drehachse der ersten Schiebevorrichtung steht, wobei die zweite Schiebenut an einem Ende angeordnet ist, das zu der ersten Schiebenut gehört und das von der Hauptwelle entfernt ist, und wobei eine Erstreckungsrichtung der zweiten Schiebenut und die Erstreckungsrichtung der ersten Schiebenut in einem eingeschlossenen Winkel festgelegt sind; und wobei eine Erstreckungsrichtung der dritten Schiebenut relativ zur Hauptwelle senkrecht zu einer Drehachse der zweiten Schiebevorrichtung steht, wobei die vierte Schiebenut an einem Ende angeordnet ist, das zu der dritten Schiebenut gehört und das von der Hauptwelle entfernt ist, und wobei eine Erstreckungsrichtung der vierten Schiebenut und die Erstreckungsrichtung der dritten Schiebenut in einem eingeschlossenen Winkel festgelegt sind; und
wenn die erste Montagehalterung und die zweite Montagehalterung relativ zueinander eingeklappt oder ausgeklappt werden, sich die erste Schiebevorrichtung um die Hauptwelle dreht und sich entlang der ersten Schiebenut verschiebt, um das erste Drehelement so anzutreiben, dass es sich entlang der zweiten Schiebenut bewegt, und sich die zweite Schiebevorrichtung um die Hauptwelle dreht und sich entlang der dritten Schiebenut verschiebt, um das zweite Drehelement so anzutreiben, dass es sich entlang der vierten Schiebenut bewegt.

2. Scharniermechanismus nach Anspruch 1, wobei die erste Schiebenut eine geradlinig geformte Schiebenut ist und die zweite Schiebenut eine geradlinig geformte Führungsnut, eine klapplinienförmige Führungsnut oder eine bogenförmige Führungsnut ist; und
wobei die dritte Schiebenut eine geradlinig geformte Schiebenut und die vierte Schiebenut eine geradlinig geformte Führungsnut, eine klapplinienförmige Führungsnut oder eine bogenförmige Führungsnut ist.

3. Scharniermechanismus nach Anspruch 1 oder 2, wobei das erste Drehelement einen ersten Körper und einen ersten Vorsprung umfasst; und wobei der erste Körper drehbar mit der ersten Schiebevorrichtung verbunden ist, wobei der erste Vorsprung an einem Ende angeordnet ist, das zu dem ersten Körper gehört und das von der ersten Schiebevorrichtung entfernt ist, und wobei der erste Vorsprung in der zweiten Schiebenut aufgenommen ist und sich in der zweiten Schiebenut bewegt, um eine verschiebbare Verbindung zwischen dem ersten Drehelement und der ersten Montagehalterung zu implementieren; und
wobei das zweite Drehelement einen zweiten Körper und einen zweiten Vorsprung umfasst; und wobei der zweite Körper drehbar mit der zweiten Schiebevorrichtung verbunden ist, wobei der zweite Vorsprung an einem Ende angeordnet ist, das zu dem zweiten Körper gehört und das von der zweiten Schiebevorrichtung entfernt ist, und wobei der zweite Vorsprung in der vierten Schiebenut aufgenommen ist und sich in der vierten Schiebenut bewegt, um eine verschiebbare Verbindung zwischen dem zweiten Drehelement und der zweiten Montagehalterung zu implementieren.

4. Scharniermechanismus nach Anspruch 3, wobei der erste Vorsprung eine erste Rolle ist und die erste Rolle auf dem ersten Körper angeordnet ist und in der Lage ist, sich relativ zu dem ersten Körper zu drehen; und wobei, wenn die erste Schiebevorrichtung entlang der ersten Schiebenut verschoben wird, die erste Rolle in der zweiten Schiebenut rollt; und
wobei der zweite Vorsprung eine zweite Rolle ist und die zweite Rolle an dem zweiten Körper angeordnet ist und in der Lage ist, sich relativ zu dem zweiten Körper zu drehen; und wobei, wenn die zweite Schiebevorrichtung entlang der dritten Schiebenut verschoben wird, die zweite Rolle in der vierten Schiebenut rollt.

5. Scharniermechanismus nach Anspruch 3, wobei der erste Vorsprung und der erste Körper integral gebildet sind und der zweite Vorsprung und der zweite Körper integral gebildet sind.

6. Scharniermechanismus nach einem der Ansprüche 1 bis 5, wobei eine Seite, die zu der ersten Schiebevorrichtung gehört und die sich nahe dem ersten Drehelement befindet, mit einer ersten Aufnahmenut versehen ist, und wobei eine Öffnung der ersten Aufnahmenut relativ zur ersten Schiebevorrichtung senkrecht zu einer Drehebene des ersten Drehelements steht; und wobei, wenn sich das erste Drehelement entlang der zweiten Schiebenut bewegt, das erste Drehelement in die erste Aufnahmenut hinein oder aus dieser heraus gedreht wird; und
wobei eine Seite, die zu der zweiten Schiebevorrichtung gehört und die sich nahe dem zweiten Drehelement befindet, mit einer zweiten Aufnahmenut versehen ist, und wobei eine Öffnung der zweiten Aufnahmenut relativ zur zweiten Schiebevorrichtung senkrecht zu einer Drehebene des zweiten Drehelements steht; und wobei, wenn sich das zweite Drehelement entlang der vierten Schiebenut bewegt, das zweite Drehelement in die zweite Aufnahmenut hinein oder aus dieser heraus gedreht wird.

7. Scharniermechanismus nach einem der Ansprüche 1 bis 6, wobei die erste Montagehalterung einen ersten Dreharm, eine erste Montageplatte und eine erste Gehäusebefestigungshalterung umfasst, wobei die erste Montageplatte zwischen der Hauptwelle und der ersten Gehäusebefestigungshalterung angeordnet ist und die erste Montageplatte an der ersten Gehäusebefestigungshalterung befestigt ist; wobei der erste Dreharm separat an der ersten Montageplatte und der ersten Gehäusebefestigungshalterung befestigt ist und ein Ende, das zu dem ersten Dreharm gehört und das der Hauptwelle zugewandt ist, drehbar mit dem ersten Drehstützelement verbunden ist; und wobei die erste Schiebenut an der ersten Montageplatte bereitgestellt ist und die zweite Schiebenut an dem ersten Dreharm oder der ersten Gehäusebefestigungshalterung bereitgestellt ist; und
wobei die zweite Montagehalterung einen zweiten Dreharm, eine zweite Montageplatte und eine zweite Gehäusebefestigungshalterung umfasst, wobei die zweite Montageplatte zwischen der Hauptwelle und der zweiten Gehäusebefestigungshalterung angeordnet ist und die zweite Montageplatte an der zweiten Gehäusebefestigungshalterung befestigt ist; wobei der zweite Dreharm separat an der zweiten Montageplatte und der zweiten Gehäusebefestigungshalterung befestigt ist und ein Ende, das zu dem zweiten Dreharm gehört und das der Hauptwelle zugewandt ist, drehbar mit dem zweiten Drehstützelement verbunden ist; und wobei die dritte Schiebenut an der zweiten Montageplatte bereitgestellt ist und die vierte Schiebenut an dem zweiten Dreharm oder der zweiten Gehäusebefestigungshalterung bereitgestellt ist.

8. Scharniermechanismus nach Anspruch 7, wobei der erste Dreharm und die erste Gehäusebefestigungshalterung gegenüberliegend angeordnet sind und die zweite Schiebenut auf einer Seite bereitgestellt ist, die zu dem ersten Dreharm gehört und die der ersten Gehäusebefestigungshalterung zugewandt ist; wobei eine dritte Aufnahmenut zwischen dem ersten Dreharm und der ersten Gehäusebefestigungshalterung gebildet ist und eine Öffnung der dritten Aufnahmenut relativ zur zweiten Schiebenut senkrecht zu einer Bewegungsebene des ersten Drehelements steht; und wobei, wenn sich das erste Drehelement entlang der zweiten Schiebenut bewegt, das erste Drehelement in die dritte Aufnahmenut hinein oder aus dieser heraus gedreht wird; und
wobei der zweite Dreharm und die zweite Gehäusebefestigungshalterung gegenüberliegend angeordnet sind und die vierte Schiebenut auf einer Seite bereitgestellt ist, die zu dem zweiten Dreharm gehört und die der zweiten Gehäusebefestigungshalterung zugewandt ist; wobei eine vierte Aufnahmenut zwischen dem zweiten Dreharm und der zweiten Gehäusebefestigungshalterung gebildet ist und eine Öffnung der vierten Aufnahmenut relativ zur vierten Schiebenut senkrecht zu einer Bewegungsebene des zweiten Drehelements steht; und wobei, wenn sich das zweite Drehelement entlang der vierten Schiebenut bewegt, das zweite Drehelement in die vierte Aufnahmenut hinein oder aus dieser heraus gedreht wird.

9. Scharniermechanismus nach Anspruch 7 oder 8, wobei eine Seite, die zu dem ersten Dreharm gehört und die der ersten Schiebevorrichtung zugewandt ist, mit einer ersten Kerbe versehen ist; und wobei, wenn die erste Montagehalterung und die zweite Montagehalterung relativ zueinander eingeklappt werden, sich die erste Schiebevorrichtung zu der ersten Montagehalterung hin verschiebt und die erste Kerbe die erste Schiebevorrichtung umgeht; und
wobei eine Seite, die zu dem zweiten Dreharm gehört und die der zweiten Schiebevorrichtung zugewandt ist, mit einer zweiten Kerbe versehen ist; und wobei, wenn die erste Montagehalterung und die zweite Montagehalterung relativ zueinander eingeklappt werden, sich die zweite Schiebevorrichtung zu der zweiten Montagehalterung hin verschiebt und die zweite Kerbe die zweite Schiebevorrichtung umgeht.

10. Scharniermechanismus nach einem der Ansprüche 1 bis 9, wobei eine Seite, die zu der ersten Schiebevorrichtung gehört und die dem ersten Drehelement zugewandt ist, mit einem ersten Drehloch versehen ist und ein erster Drehvorsprung auf einer Seite angeordnet ist, die zu dem ersten Drehelement gehört und die der ersten Schiebevorrichtung zugewandt ist; und wobei der erste Drehvorsprung in dem ersten Drehloch aufgenommen ist und sich in dem ersten Drehloch dreht, um eine drehbare Verbindung zwischen der ersten Schiebevorrichtung und dem ersten Drehelement zu implementieren; und
wobei eine Seite, die zu der zweiten Schiebevorrichtung gehört und die dem zweiten Drehelement zugewandt ist, mit einem zweiten Drehloch versehen ist und ein zweiter Drehvorsprung auf einer Seite angeordnet ist, die zu dem zweiten Drehelement gehört und die der zweiten Schiebevorrichtung zugewandt ist; und wobei der zweite Drehvorsprung in dem zweiten Drehloch aufgenommen ist und sich in dem zweiten Drehloch dreht, um eine drehbare Verbindung zwischen der zweiten Schiebevorrichtung und dem zweiten Drehelement zu implementieren.

11. Scharniermechanismus nach Anspruch 10, wobei das erste Drehloch und das zweite Drehloch beide ringförmige Sacklöcher sind und der erste Drehvorsprung und der zweite Drehvorsprung beide ringförmige Vorsprünge sind.

12. Scharniermechanismus nach einem der Ansprüche 1 bis 11, wobei die erste Schiebebaugruppe ferner einen ersten Verbindungsstift und einen ersten Haltering umfasst; wobei die Seite, die zu der ersten Schiebevorrichtung gehört und die sich nahe dem ersten Drehelement befindet, mit einem ersten Montageloch versehen ist, und eine Seite, die zu dem ersten Drehelement gehört und die sich nahe der ersten Schiebevorrichtung befindet, mit einem zweiten Montageloch versehen ist; und wobei der erste Verbindungsstift durch das erste Montageloch und das zweite Montageloch verläuft und an dem ersten Haltering befestigt ist; und
wobei die zweite Schiebebaugruppe ferner einen zweiten Verbindungsstift und einen zweiten Haltering umfasst; wobei die Seite, die zu der zweiten Schiebevorrichtung gehört und die sich nahe dem zweiten Drehelement befindet, mit einem dritten Montageloch versehen ist, und eine Seite, die zu dem zweiten Drehelement gehört und die sich nahe der zweiten Schiebevorrichtung befindet, mit einem vierten Montageloch versehen ist; und wobei der zweite Verbindungsstift durch das dritte Montageloch und das vierte Montageloch verläuft und an dem zweiten Haltering befestigt ist.

13. Elektronisches Gerät (010), das eine flexible Anzeige (020), ein erstes Gehäuse (040a), ein zweites Gehäuse (040b) und den Scharniermechanismus (030) nach einem der Ansprüche 1 bis 12 umfasst, wobei das erste Gehäuse an der ersten Montagehalterung befestigt ist, das zweite Gehäuse an der zweiten Montagehalterung befestigt ist und die flexible Anzeige das erste Gehäuse, das zweite Gehäuse und den Scharniermechanismus durchgehend bedeckt und separat an dem ersten Gehäuse und dem zweiten Gehäuse befestigt ist.

## Revendications

1. Mécanisme de charnière (030), utilisé dans un dispositif électronique pliable (010),
dans lequel le mécanisme de charnière comprend une tige principale (400), un premier appui de montage (031a), un second appui de montage (031b), un premier élément de support de rotation (300a), un second élément de support de rotation (300b), un premier ensemble de coulissement (032a), et un second ensemble de coulissement (032b), dans lequel
le premier appui de montage et le second appui de montage sont disposés de façon opposée sur deux côtés de la tige principale ; le premier appui de montage est pourvu d'une première rainure de coulissement et d'une deuxième rainure de coulissement ; et le second appui de montage est pourvu d'une troisième rainure de coulissement et d'une quatrième rainure de coulissement ;
le premier élément de support de rotation est situé entre la tige principale et le premier appui de montage, et est relié de façon pouvant être mise en rotation à la tige principale et au premier appui de montage séparément ; et le second élément de support de rotation est situé entre la tige principale et le second appui de montage, et est relié de façon pouvant être mise en rotation à la tige principale et au second appui de montage séparément ;
le premier ensemble de coulissement comprend un premier coulisseau et un premier élément rotatif ; une extrémité du premier coulisseau est reliée de façon pouvant être mise en rotation à la tige principale, et l'autre extrémité est reliée de façon pouvant coulisser au premier appui de montage par le biais de la première rainure de coulissement ; et une extrémité du premier élément rotatif est reliée de façon pouvant être mise en rotation à une extrémité qui est du premier coulisseau et qui est éloignée de la tige principale, et l'autre extrémité est reliée de façon pouvant coulisser au premier appui de montage par le biais de la deuxième rainure de coulissement ;
le second ensemble de coulissement comprend un second coulisseau et un second élément rotatif ; une extrémité du second coulisseau est reliée de façon pouvant être mise en rotation à la tige principale, et l'autre extrémité est reliée de façon pouvant coulisser au second appui de montage par le biais de la troisième rainure de coulissement ; et une extrémité du second élément rotatif est reliée de façon pouvant être mise en rotation à une extrémité qui est du second coulisseau et qui est éloignée de la tige principale, et l'autre extrémité est reliée de façon pouvant coulisser au second appui de montage par le biais de la quatrième rainure de coulissement ;
une direction d'extension de la première rainure de coulissement est perpendiculaire à un axe de rotation du premier coulisseau relativement à la tige principale, la deuxième rainure de coulissement est située à une extrémité qui est de la première rainure de coulissement et qui est éloignée de la tige principale, et une direction d'extension de la deuxième rainure de coulissement et la direction d'extension de la première rainure de coulissement sont réglées à un angle inclus ; et une direction d'extension de la troisième rainure de coulissement est perpendiculaire à un axe de rotation du second coulisseau relativement à la tige principale, la quatrième rainure de coulissement est située à une extrémité qui est de la troisième rainure de coulissement et qui est éloignée de la tige principale, et une direction d'extension de la quatrième rainure de coulissement et la direction d'extension de la troisième rainure de coulissement sont réglées à un angle inclus ; et
lorsque le premier appui de montage et le second appui de montage sont pliés ou dépliés l'un relativement à l'autre, le premier coulisseau entre en rotation autour de la tige principale et coulisse le long de la première rainure de coulissement, pour amener le premier élément rotatif à se mouvoir le long de la deuxième rainure de coulissement, et le second coulisseau entre en rotation autour de la tige principale et coulisse le long de la troisième rainure de coulissement, pour amener le second élément rotatif à se mouvoir le long de la quatrième rainure de coulissement.

2. Mécanisme de charnière selon la revendication 1, dans lequel la première rainure de coulissement est une rainure de coulissement en forme de ligne droite, et la deuxième rainure de coulissement est une rainure de guidage en forme de ligne droite, une rainure de guidage en forme de ligne de pli, ou une rainure de guidage en forme d'arc ; et
la troisième rainure de coulissement est une rainure de coulissement en forme de ligne droite, et la quatrième rainure de coulissement est une rainure de guidage en forme de ligne droite, une rainure de guidage en forme de ligne de pli, ou une rainure de guidage en forme d'arc.

3. Mécanisme de charnière selon la revendication 1 ou 2, dans lequel le premier élément rotatif comprend un premier corps et une première saillie ; et le premier corps est relié de façon pouvant être mise en rotation au premier coulisseau, la première saillie est disposée à une extrémité qui est du premier corps et qui est éloignée du premier coulisseau, et la première saillie est logée dans la deuxième rainure de coulissement, et se meut dans la deuxième rainure de coulissement, pour mettre en œuvre une liaison coulissante entre le premier élément rotatif et le premier appui de montage ; et
le second élément rotatif comprend un second corps et une seconde saillie ; et le second corps est relié de façon pouvant être mise en rotation au second coulisseau, la seconde saillie est disposée à une extrémité qui est du second corps et qui est éloignée du second coulisseau, et la seconde saillie est logée dans la quatrième rainure de coulissement, et se meut dans la quatrième rainure de coulissement, pour mettre en œuvre une liaison coulissante entre le second élément rotatif et le second appui de montage.

4. Mécanisme de charnière selon la revendication 3, dans lequel la première saillie est un premier rouleau, et le premier rouleau est disposé sur le premier corps et est capable d'entrer en rotation relativement au premier corps ; et, lorsque le premier coulisseau coulisse le long de la première rainure de coulissement, le premier rouleau roule dans la deuxième rainure de coulissement ; et
la seconde saillie est un second rouleau, et le second rouleau est disposé sur le second corps et est capable d'entrer en rotation relativement au second corps ; et, lorsque le second coulisseau coulisse le long de la troisième rainure de coulissement, le second rouleau roule dans la quatrième rainure de coulissement.

5. Mécanisme de charnière selon la revendication 3, dans lequel la première saillie et le premier corps sont formés de façon monobloc, et la seconde saillie et le second corps sont formés de façon monobloc.

6. Mécanisme de charnière selon l'une quelconque des revendications 1 à 5, dans lequel un côté qui est du premier coulisseau et qui est près du premier élément rotatif est pourvu d'une première rainure de logement, et une ouverture de la première rainure de logement est perpendiculaire à un plan de rotation du premier élément rotatif relativement au premier coulisseau ; et, lorsque le premier élément rotatif se meut le long de la deuxième rainure de coulissement, le premier élément rotatif est mis en rotation jusque dans la première rainure de logement ou en dehors de celle-ci ; et
un côté qui est du second coulisseau et qui est près du second élément rotatif est pourvu d'une deuxième rainure de logement, et une ouverture de la deuxième rainure de logement est perpendiculaire à un plan de rotation du second élément rotatif relativement au second coulisseau ; et, lorsque le second élément rotatif se meut le long de la quatrième rainure de coulissement, le second élément rotatif est mis en rotation jusque dans la deuxième rainure de logement ou en dehors de celle-ci.

7. Mécanisme de charnière selon l'une quelconque des revendications 1 à 6, dans lequel le premier appui de montage comprend un premier bras rotatif, une première plaque de montage, et un premier appui de fixation de boîtier, la première plaque de montage est disposée entre la tige principale et le premier appui de fixation de boîtier, et la première plaque de montage est fixée au premier appui de fixation de boîtier ; le premier bras rotatif est fixé séparément à la première plaque de montage et au premier appui de fixation de boîtier, et une extrémité qui est du premier bras rotatif et qui fait face à la tige principale est reliée de façon pouvant être mise en rotation au premier élément de support de rotation ; et la première rainure de coulissement est prévue sur la première plaque de montage, et la deuxième rainure de coulissement est prévue sur le premier bras rotatif ou le premier appui de fixation de boîtier ; et
le second appui de montage comprend un second bras rotatif, une seconde plaque de montage, et un second appui de fixation de boîtier, la seconde plaque de montage est disposée entre la tige principale et le second appui de fixation de boîtier, et la seconde plaque de montage est fixée au second appui de fixation de boîtier ; le second bras rotatif est fixé séparément à la seconde plaque de montage et au second appui de fixation de boîtier, et une extrémité qui est du second bras rotatif et qui fait face à la tige principale est reliée de façon pouvant être mise en rotation au second élément de support de rotation ; et la troisième rainure de coulissement est prévue sur la seconde plaque de montage, et la quatrième rainure de coulissement est prévue sur le second bras rotatif ou le second appui de fixation de boîtier.

8. Mécanisme de charnière selon la revendication 7, dans lequel le premier bras rotatif et le premier appui de fixation de boîtier sont disposés de façon opposée, et la deuxième rainure de coulissement est prévue sur un côté qui est du premier bras rotatif et qui fait face au premier appui de fixation de boîtier ; une troisième rainure de logement est formée entre le premier bras rotatif et le premier appui de fixation de boîtier, et une ouverture de la troisième rainure de logement est perpendiculaire à un plan de mouvement du premier élément rotatif relativement à la deuxième rainure de coulissement ; et, lorsque le premier élément rotatif se meut le long de la deuxième rainure de coulissement, le premier élément rotatif est mis en rotation jusque dans la troisième rainure de logement ou en dehors de celle-ci ; et
le second bras rotatif et le second appui de fixation de boîtier sont disposés de façon opposée, et la quatrième rainure de coulissement est prévue sur un côté qui est du second bras rotatif et qui fait face au second appui de fixation de boîtier ; une quatrième rainure de logement est formée entre le second bras rotatif et le second appui de fixation de boîtier, et une ouverture de la quatrième rainure de logement est perpendiculaire à un plan de mouvement du second élément rotatif relativement à la quatrième rainure de coulissement ; et, lorsque le second élément rotatif se meut le long de la quatrième rainure de coulissement, le second élément rotatif est mis en rotation jusque dans la quatrième rainure de logement ou en dehors de celle-ci.

9. Mécanisme de charnière selon la revendication 7 ou 8, dans lequel un côté qui est du premier bras rotatif et qui fait face au premier coulisseau est pourvu d'une première encoche ; et, lorsque le premier appui de montage et le second appui de montage sont pliés l'un relativement à l'autre, le premier coulisseau coulisse vers le premier appui de montage, et la première encoche évite le premier coulisseau ; et
un côté qui est du second bras rotatif et qui fait face au second coulisseau est pourvu d'une seconde encoche ; et, lorsque le premier appui de montage et le second appui de montage sont pliés l'un relativement à l'autre, le second coulisseau coulisse vers le second appui de montage, et la seconde encoche évite le second coulisseau.

10. Mécanisme de charnière selon l'une quelconque des revendications 1 à 9, dans lequel un côté qui est du premier coulisseau et qui fait face au premier élément rotatif est pourvu d'un premier trou rotatif, et un premier bossage rotatif est disposé sur un côté qui est du premier élément rotatif et qui fait face au premier coulisseau ; et le premier bossage rotatif est logé dans le premier trou rotatif, et entre en rotation dans le premier trou rotatif, pour mettre en œuvre une liaison pouvant être mise en rotation entre le premier coulisseau et le premier élément rotatif ; et
un côté qui est du second coulisseau et qui fait face au second élément rotatif est pourvu d'un second trou rotatif, et un second bossage rotatif est disposé sur un côté qui est du second élément rotatif et qui fait face au second coulisseau ; et le second bossage rotatif est logé dans le second trou rotatif, et entre en rotation dans le second trou rotatif, pour mettre en œuvre une liaison pouvant être mise en rotation entre le second coulisseau et le second élément rotatif.

11. Mécanisme de charnière selon la revendication 10, dans lequel le premier trou rotatif et le second trou rotatif sont tous les deux des trous aveugles annulaires, et le premier bossage rotatif et le second bossage rotatif sont tous les deux des bossages annulaires.

12. Mécanisme de charnière selon l'une quelconque des revendications 1 à 11, dans lequel le premier ensemble de coulissement comprend en outre une première goupille de liaison et une première bague de retenue ; le côté qui est du premier coulisseau et qui est près du premier élément rotatif est pourvu d'un premier trou de montage, et un côté qui est du premier élément rotatif et qui est près du premier coulisseau est pourvu d'un deuxième trou de montage ; et la première goupille de liaison passe à travers le premier trou de montage et le deuxième trou de montage, et est fixée à la première bague de retenue ; et
le second ensemble de coulissement comprend en outre une seconde goupille de liaison et une seconde bague de retenue ; le côté qui est du second coulisseau et qui est près du second élément rotatif est pourvu d'un troisième trou de montage, et un côté qui est du second élément rotatif et qui est près du second coulisseau est pourvu d'un quatrième trou de montage ; et la seconde goupille de liaison passe à travers le troisième trou de montage et le quatrième trou de montage, et est fixée à la seconde bague de retenue.

13. Dispositif électronique (010), comprenant un écran d'affichage flexible (020), un premier boîtier (040a), un second boîtier (040b), et le mécanisme de charnière (030) selon l'une quelconque des revendications 1 à 12, dans lequel le premier boîtier est fixé au premier appui de montage, le second boîtier est fixé au second appui de montage, et l'écran d'affichage flexible couvre de façon continue le premier boîtier, le second boîtier, et le mécanisme de charnière, et est fixé séparément au premier boîtier et au second boîtier.
